(19) **Europäisches Patentamt / European Patent Office / Office européen des brevets**

(11) **EP 4 495 640 A1**

(12) **EUROPEAN PATENT APPLICATION**

(43) Date of publication:
22.01.2025  Bulletin 2025/04

(21) Application number: 24186325.7

(22) Date of filing: 03.07.2024

(51) International Patent Classification (IPC):
G02B 5/00 $^{(2006.01)}$    G02B 13/00 $^{(2006.01)}$
G02B 27/00 $^{(2006.01)}$

(52) Cooperative Patent Classification (CPC):
G02B 27/0018; G02B 5/003; G02B 13/001;
G02B 13/0065

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.07.2023  US 202363512307 P
20.03.2024  TW 113110345

(71) Applicant: Largan Precision Co. Ltd.
Taichung City 408 (TW)

(72) Inventors:
• CHENG, Chih-Wei
Taichung City 408 (TW)
• LIN, Sheng-Wen
Taichung City 408 (TW)
• LIU, Ssu-Hsin
Taichung City 408 (TW)
• HSIAO, Hsiu-Yi
Taichung City 408 (TW)
• CHOU, Ming-Ta
Taichung City 408 (TW)

(74) Representative: Jakelski & Althoff
Patentanwälte PartG mbB
Patentanwälte
Partnerschaftsgesellschaft
Mollenbachstraße 37
71229 Leonberg (DE)

(54) **IMAGING LENS ASSEMBLY MODULE, CAMERA MODULE AND ELECTRONIC DEVICE**

(57) An imaging lens assembly module includes an imaging lens element set, a light folding element and a plate-shaped light blocking element. The imaging lens element set has an optical axis, and includes a lens element. The light folding element is configured to fold the optical axis at least once, and includes an incident surface, an exit surface and an optical reflecting surface. The plate-shaped light blocking element keeps an air distance between the plate-shaped light blocking element and the light folding element, and includes two layered structures and columnar air structures. The layered structures are corresponding to the light folding element. The columnar air structures are farther away from the light folding element than a surface of the plate-shaped light blocking element from the light folding element, and the surface of the plate-shaped light blocking element faces toward the light folding element.

Fig. 1A

**Description**

**BACKGROUND**

Technical Field

The present disclosure relates to an imaging lens assembly module and a camera module. More particularly, the present disclosure relates to an imaging lens assembly module and a camera module applicable to portable electronic devices.

Description of Related Art

In recent years, portable electronic devices have developed rapidly. For example, intelligent electronic devices and tablets have been filled in the lives of modern people, and camera modules and imaging lens assembly modules mounted on portable electronic devices have also prospered. However, as technology advances, the quality requirements of the imaging lens assembly module are becoming higher and higher. Therefore, an imaging lens assembly module, which can reduce a flare, needs to be developed.

**SUMMARY**

According to one aspect of the present disclosure, an imaging lens assembly module includes an imaging lens element set, at least one light folding element and a plate-shaped light blocking element. The imaging lens element set has an optical axis, and includes at least one lens element. The at least one light folding element is configured to fold the optical axis at least once, and the at least one light folding element includes an incident surface, an exit surface and at least one optical reflecting surface. The plate-shaped light blocking element keeps an air distance between the plate-shaped light blocking element and the at least one light folding element, and includes at least two layered structures and a plurality of columnar air structures. The at least two layered structures are disposed corresponding to the at least one light folding element. The columnar air structures are farther away from the at least one light folding element than a surface of the plate-shaped light blocking element from the at least one light folding element, and the surface of the plate-shaped light blocking element faces toward the at least one light folding element, wherein a thickness of the plate-shaped light blocking element is Dt, a depth of each of the columnar air structures is d, and the following condition is satisfied: $0.1 \leq d/Dt \leq 1$.

According to the imaging lens assembly module of the aforementioned aspect, wherein the thickness of the plate-shaped light blocking element is Dt, the depth of each of the columnar air structures is d, and the following condition is satisfied: $0.30 \leq d/Dt \leq 0.95$.

According to the imaging lens assembly module of the aforementioned aspect, wherein the at least two layered structures include at least one cladding layer and at least one base layer, a sum of a thickness of one of the at least one cladding layer and a thickness of one of the at least one base layer is Dm, the thickness of the plate-shaped light blocking element is Dt, and the following condition is satisfied: $0.5 \leq Dm/Dt \leq 1$.

According to the imaging lens assembly module of the aforementioned aspect, wherein a number of the at least two layered structures of the plate-shaped light blocking element is two.

According to the imaging lens assembly module of the aforementioned aspect, wherein a diameter of each of the columnar air structures is Dc, and the following condition is satisfied: $0.005 \text{ mm} \leq Dc \leq 0.021 \text{ mm}$.

According to the imaging lens assembly module of the aforementioned aspect, wherein the diameter of each of the columnar air structures is Dc, and the following condition is satisfied: $0.007 \text{ mm} \leq Dc \leq 0.017 \text{ mm}$.

According to the imaging lens assembly module of the aforementioned aspect, wherein a distance between adjacent two of the columnar air structures is Ds, and the following condition is satisfied: $0.01 \text{ mm} \leq Ds \leq 0.25 \text{ mm}$.

According to the imaging lens assembly module of the aforementioned aspect, wherein the distance between the adjacent two of the columnar air structures is Ds, and the following condition is satisfied: $0.01 \text{ mm} \leq Ds \leq 0.10 \text{ mm}$.

According to the imaging lens assembly module of the aforementioned aspect, wherein the depth of each of the columnar air structures is d, and the following condition is satisfied: $0.01 \text{ mm} \leq d \leq 0.10 \text{ mm}$.

According to the imaging lens assembly module of the aforementioned aspect, wherein an area of the surface of the plate-shaped light blocking element is A, an area of a region with the columnar air structures on the surface of the plate-shaped light blocking element is Ad, and the following condition is satisfied: $0.005 \leq Ad/A \leq 1$.

According to the imaging lens assembly module of the aforementioned aspect, wherein the area of the surface of the plate-shaped light blocking element is A, the area of the region with the columnar air structures on the surface of the plate-shaped light blocking element is Ad, and the following condition is satisfied: $0.005 \leq Ad/A \leq 0.750$.

According to the imaging lens assembly module of the aforementioned aspect, wherein the plate-shaped light blocking element further includes an aperture structure, the aperture structure is disposed corresponding to the at least one light folding element.

According to the imaging lens assembly module of the aforementioned aspect, wherein the aperture structure includes a light blocking structure, the light blocking structure includes a plurality of protrusions, an average maximum height of the light blocking structure is h, and the following condition is satisfied: 0.001 mm ≤ h ≤ 0.050 mm.

According to the imaging lens assembly module of the aforementioned aspect, the imaging lens assembly module further includes an assembling portion disposed corresponding to the surface of the plate-shaped light blocking element, wherein the assembling portion keeps a predetermined air distance between the plate-shaped light blocking element and the at least one light folding element.

According to the imaging lens assembly module of the aforementioned aspect, the imaging lens assembly module further includes an assembling portion disposed corresponding to the other surface of the plate-shaped light blocking element, wherein the assembling portion keeps a predetermined air distance between the plate-shaped light blocking element and the at least one light folding element.

According to the imaging lens assembly module of the aforementioned aspect, wherein the at least one light folding element is a prism.

According to one aspect of the present disclosure, a camera module includes the imaging lens assembly module of the aforementioned aspect and an image sensor, wherein the image sensor is disposed on an image surface of the imaging lens assembly module.

According to one aspect of the present disclosure, an electronic device includes the camera module of the aforementioned aspect.

According to one aspect of the present disclosure, an imaging lens assembly module includes an imaging lens element set and a plate-shaped light blocking element. The imaging lens element set has an optical axis, and includes at least one lens element. The plate-shaped light blocking element keeps an air distance between the plate-shaped light blocking element and the at least one lens element, and includes at least two layered structures and a plurality of columnar air structures. The layered structures are disposed corresponding to the at least one lens element. The columnar air structures are farther away from the at least one lens element than a surface of the plate-shaped light blocking element from the at least one lens element, and the surface of the plate-shaped light blocking element faces toward the at least one lens element, wherein a thickness of the plate-shaped light blocking element is Dt, a depth of each of the columnar air structures is d, and the following condition is satisfied: 0.1 ≤ d/Dt ≤ 1.

According to the imaging lens assembly module of the aforementioned aspect, wherein the thickness of the plate-shaped light blocking element is Dt, the depth of each of the plurality of columnar air structures is d, and the following condition is satisfied: 0.30 ≤ d/Dt ≤ 0.95.

According to the imaging lens assembly module of the aforementioned aspect, wherein the at least two layered structures include at least one cladding layer and at least one base layer, a sum of a thickness of one of the at least one cladding layer and a thickness of one of the at least one base layer is Dm, the thickness of the plate-shaped light blocking element is Dt, and the following condition is satisfied: 0.5 ≤ Dm/Dt ≤ 1.

According to the imaging lens assembly module of the aforementioned aspect, wherein a number of the at least two layered structures of the plate-shaped light blocking element is two.

According to the imaging lens assembly module of the aforementioned aspect, wherein a diameter of each of the columnar air structures is Dc, and the following condition is satisfied: 0.005 mm ≤ Dc ≤ 0.021 mm.

According to the imaging lens assembly module of the aforementioned aspect, wherein a diameter of each of the columnar air structures is Dc, and the following condition is satisfied: 0.007 mm ≤ Dc ≤ 0.017 mm.

According to the imaging lens assembly module of the aforementioned aspect, wherein a distance between adjacent two of the columnar air structures is Ds, and the following condition is satisfied: 0.01 mm ≤ Ds ≤ 0.25 mm.

According to the imaging lens assembly module of the aforementioned aspect, wherein the distance between the adjacent two of the columnar air structures is Ds, and the following condition is satisfied: 0.01 mm ≤ Ds ≤ 0.10 mm.

According to the imaging lens assembly module of the aforementioned aspect, wherein the depth of each of the columnar air structures is d, and the following condition is satisfied: 0.01 mm ≤ d ≤ 0.10 mm.

According to the imaging lens assembly module of the aforementioned aspect, wherein an area of the surface of the plate-shaped light blocking element is A, an area of a region with the columnar air structures on the surface of the plate-shaped light blocking element is Ad, and the following condition is satisfied: 0.005 ≤ Ad/A ≤ 1.

According to the imaging lens assembly module of the aforementioned aspect, wherein the area of the surface of the plate-shaped light blocking element is A, the area of the region with the columnar air structures on the surface of the plate-shaped light blocking element is Ad, and the following condition is satisfied: 0.005 ≤ Ad/A ≤ 0.750.

According to the imaging lens assembly module of the aforementioned aspect, wherein the plate-shaped light blocking element further includes a aperture structure, the aperture structure disposed corresponding to the at least one lens element.

According to the imaging lens assembly module of the aforementioned aspect, wherein the aperture structure includes a light blocking structure, the light blocking structure presents a plurality of protrusions, an average maximum height of the light blocking structure is h, and the following condition is satisfied: 0.001 mm ≤ h ≤ 0.050 mm.

**BRIEF DESCRIPTION OF THE DRAWINGS**

The present disclosure can be more fully understood by reading the following detailed description of the embodiment, with reference made to the accompanying drawings as follows:

Fig. 1A is a schematic view of a camera module according to the 1st embodiment of the present disclosure.

Fig. 1B is a schematic view of a light path of the camera module according to the 1st embodiment in Fig. 1A.

Fig. 1C is an exploded view of the imaging lens assembly module according to the 1st embodiment in Fig. 1A.

Fig. 1D is a schematic view of a lens element being a molding glass lens element according to the 1st embodiment in Fig. 1A.

Fig. 1E is a partial enlarged view of the plate-shaped light blocking element according to the 1st embodiment in Fig. 1A.

Fig. 1F is an enlarged side view of the plate-shaped light blocking element according to the 1st embodiment in Fig. 1A.

Fig. 1G is a partial enlarged view of the plate-shaped light blocking element according to the 1st embodiment in Fig. 1F.

Fig. 2A is a partial enlarged view of a plate-shaped light blocking element according to the 2nd embodiment of the present disclosure.

Fig. 2B is an enlarged side view of the plate-shaped light blocking element according to the 2nd embodiment in Fig. 2A.

Fig. 2C is a partial enlarged view of the plate-shaped light blocking element according to the 2nd embodiment in Fig. 2B.

Fig. 3A is a partial enlarged view of a plate-shaped light blocking element according to the 3rd embodiment of the present disclosure.

Fig. 3B is an enlarged side view of the plate-shaped light blocking element according to the 3rd embodiment in Fig. 3A.

Fig. 3C is a partial enlarged view of the plate-shaped light blocking element according to the 3rd embodiment in Fig. 3B.

Fig. 4A is a partial enlarged view of a plate-shaped light blocking element according to the 4th embodiment of the present disclosure.

Fig. 4B is an enlarged side view of the plate-shaped light blocking element according to the 4th embodiment in Fig. 4A.

Fig. 4C is a partial enlarged view of the plate-shaped light blocking element according to the 4th embodiment in Fig. 4B.

Fig. 5A is a partial enlarged view of a plate-shaped light blocking element according to the 5th embodiment of the present disclosure.

Fig. 5B is an enlarged side view of the plate-shaped light blocking element according to the 5th embodiment in Fig. 5A.

Fig. 5C is a partial enlarged view of the plate-shaped light blocking element according to the 5th embodiment in Fig. 5B.

Fig. 6A is a partial enlarged view of a plate-shaped light blocking element according to the 6th embodiment of the present disclosure.

Fig. 6B is an enlarged side view of the plate-shaped light blocking element according to the 6th embodiment in Fig. 6A.

Fig. 6C is a partial enlarged view of the plate-shaped light blocking element according to the 6th embodiment in Fig. 6B.

Fig. 7A is a partial enlarged view of a plate-shaped light blocking element according to the 7th embodiment of the present disclosure.

Fig. 7B is an enlarged side view of the plate-shaped light blocking element according to the 7th embodiment in Fig. 7A.

Fig. 7C is a partial enlarged view of the plate-shaped light blocking element according to the 7th embodiment in Fig. 7B.

Fig. 8A is a partial enlarged view of a plate-shaped light blocking element according to the 8th embodiment of the present disclosure.

Fig. 8B is an enlarged side view of the plate-shaped light blocking element according to the 8th embodiment in Fig. 8A.

Fig. 8C is a partial enlarged view of the plate-shaped light blocking element according to the 8th embodiment in Fig. 8B.

Fig. 9A is an enlarged side view of a plate-shaped light blocking element according to the 9th embodiment of the present disclosure.

Fig. 9B is a partial enlarged view of the plate-shaped light blocking element according to the 9th embodiment in Fig. 9A.

Fig. 10A is a schematic view of an electronic device according to the 10th embodiment of the present disclosure.

Fig. 10B is another schematic view of the electronic device according to the 10th embodiment in Fig. 10A.

Fig. 10C is a schematic view of an image captured via the electronic device according to the 10th embodiment in Fig. 10B.

Fig. 10D is a schematic view of another image captured via the electronic device according to the 10th embodiment in Fig. 10B.

Fig. 10E is a schematic view of another image captured via the electronic device according to the 10th embodiment in Fig. 10B.

Fig. 11 is a schematic view of an electronic device according to the 11th embodiment of the present disclosure.

Fig. 12A is a schematic view of a vehicle instrument according to the 12th embodiment of the present disclosure.

Fig. 12B is another schematic view of the vehicle instrument according to the 12th embodiment in Fig. 12A.

Fig. 12C is another schematic view of the vehicle instrument according to the 12th embodiment in Fig. 12A.

## DETAILED DESCRIPTION

The present disclosure provides an imaging lens assembly module that includes an imaging lens element set and a plate-shaped light blocking element, wherein the imaging lens element set has an optical axis. The imaging lens element set includes at least one lens element, and the plate-shaped light blocking element includes at least two layered structures and a plurality of columnar air structures, wherein the lens element can be a molding glass lens element or a plastic lens element, the columnar air structures can be arranged in arrays, but the present disclosure is not limited thereto. When a thickness of the plate-shaped light blocking element is Dt, and a depth of each of the columnar air structures is d, the following condition is satisfied: $0.1 \leq d/Dt \leq 1$. Particularly, it is favorable for preventing a generation of the non-imaging light by the plate-shaped light blocking element so as to reduce the flare.

The plate-shaped light blocking element can keep an air distance between the plate-shaped light blocking element and the lens element, and the layered structures can be disposed corresponding to the lens element, wherein the columnar air structures are farther away from the lens element than a surface of the plate-shaped light blocking element from the lens element, and the surface of the plate-shaped light blocking element faces toward the lens element.

Moreover, the imaging lens assembly module can further include at least one light folding element, wherein the light folding element folds the optical axis at least once and the light folding element includes an incident surface, an exit surface and at least one optical reflecting surface. The plate-shaped light blocking element can keep an air distance between the plate-shaped light blocking element and the light folding element, and the layered structures can be disposed corresponding to the light folding element, wherein the columnar air structures are farther away from the light folding element than a surface of the plate-shaped light blocking element from the light folding element, and the surface of the plate-shaped light blocking element faces toward the light folding element. Accordingly, the columnar air structures can conduct the air distance between the plate-shaped light blocking element and the light folding element.

A number of the layered structures of the plate-shaped light blocking element can be two. When the number of the layered structures is only two, a cladding layer can be located on a base layer or below the base layer along a direction parallel to the optical axis. Moreover, the base layer can be made of plastic material or metal material, such as brass, cold-rolled steel, etc., but the present disclosure is not limited thereto.

The plate-shaped light blocking element can further include an aperture structure, wherein the aperture structure is disposed corresponding to the light folding element. Therefore, the aperture structure can allow the light which enters the incident surface or exits the exit surface to pass through. Alternatively, the aperture structure can be disposed corresponding to the lens element. Therefore, it is favorable for avoiding the generation of additional non-imaging light. Particularly, the aperture structure can allow the light which enters or exits the lens element to pass through.

The imaging lens assembly module can further include an assembling portion, wherein the assembling portion is disposed corresponding to the surface of the plate-shaped light blocking element or the other surface of the plate-shaped light blocking element, and the assembling portion keeps a restrictedly predetermined air distance between the plate-shaped light blocking element and the light folding element. In detail, the assembling portion can be a gum, a retainer or a mechanical design matching the plate-shaped light blocking element to keep the air distance between the plate-shaped light blocking element and the light folding element.

The light folding element can be a prism, wherein the prism can be a plastic prism or a glass prism. Moreover, the plastic prism can be made by injection molding, and the glass prism can be a molding glass prism, but the present disclosure is not limited thereto.

When the thickness of the plate-shaped light blocking element is Dt, and the depth of each of the columnar air structures is d, the following condition can be satisfied: $0.30 \leq d/Dt \leq 0.95$. Therefore, it is favorable for increasing the production yield rate.

The layered structures can include at least one cladding layer and at least one base layer. When a sum of a thickness of one of the cladding layer and a thickness of one of the base layer is Dm, and the thickness of the plate-shaped light blocking element is Dt, the following condition can be satisfied: $0.5 \leq Dm/Dt \leq 1$. Therefore, it is favorable for increasing the process efficiency. It must be noted that both of a number of the cladding layer and a number of the base layer can be plural.

Particularly, when the number of the layered structures is more than two, the cladding layer can be located on the base layer along the direction parallel to the optical axis, but the present disclosure is not limited thereto. Moreover, when the number of the cladding layers is two which are a first cladding layer and a second cladding layer, a thickness of the first cladding layer is D1, a thickness of the second cladding layer is D2, and a thickness of the base layer is Db, wherein the sum of the thickness of one of the cladding layer and the thickness of one of the base layer is a sum of the thickness of the first cladding layer D1 and the thickness of the base layer is Db. When the number of the cladding layer is one, a thickness of the cladding layer is D, and the thickness of the base layer is Db, wherein the sum of the thickness of one of the cladding layer and the thickness of one of the base layer is a sum of the thickness of the cladding layer D and the thickness of the base layer is Db.

When a diameter of each of the columnar air structures is Dc, the following condition can be satisfied: $0.005 \, mm \leq Dc \leq 0.021 \, mm$. Therefore, it is favorable for providing a process processing with the higher precision. Moreover, the following condition can be satisfied: $0.007 \, mm \leq Dc \leq 0.017 \, mm$.

When a distance between adjacent two of the columnar air structures is Ds, the following condition can be satisfied: $0.01 \, mm \leq Ds \leq 0.25 \, mm$. It is favorable for providing a wider range of the stray light elimination effect via controlling the distance within a specific range. Furthermore, the following condition can be satisfied: $0.01 \, mm \leq Ds \leq 0.10 \, mm$. Therefore, it is favorable for increasing the efficiency to eliminate the stray light.

When the depth of each of the columnar air structures is d, the following condition can be satisfied: $0.01 \, mm \leq d \leq 0.10 \, mm$. Therefore, it is favorable for destroying the stray light.

When an area of the surface of the plate-shaped light blocking element is A, and an area of a region with the columnar air structures on the surface of the plate-shaped light blocking element is Ad, the following condition can be satisfied: $0.005 \leq Ad/A \leq 1$. Therefore, it is favorable for providing the better imaging quality, and eliminating the stray light. Moreover, the following condition can be satisfied: $0.005 \leq Ad/A \leq 0.750$. Therefore, it is favorable for improving the production efficiency while the image quality is maintained.

The aperture structure can include a light blocking structure, wherein the light blocking structure comprises a plurality of protrusions. When an average maximum height of the light blocking structure is h, the following condition can be satisfied: 0.001 mm ≤ h ≤ 0.050 mm. Therefore, it is favorable for reducing the generation of the non-imaging light via the light blocking structure. Particularly, the average maximum height of the light blocking structure refers to a maximum height of the protrusions.

Each aforementioned technical characteristic in the imaging lens assembly module of the present disclosure can be alternatively disposed to achieve a corresponding function.

The present disclosure provides a camera module including the aforementioned imaging lens assembly module and an image sensor, wherein the image sensor is disposed on an image surface of the imaging lens assembly module.

The present disclosure provides an electronic device including the aforementioned camera module.

According to the aforementioned embodiment, specific embodiments and examples are provided, and illustrated via figures.

<1st embodiment>

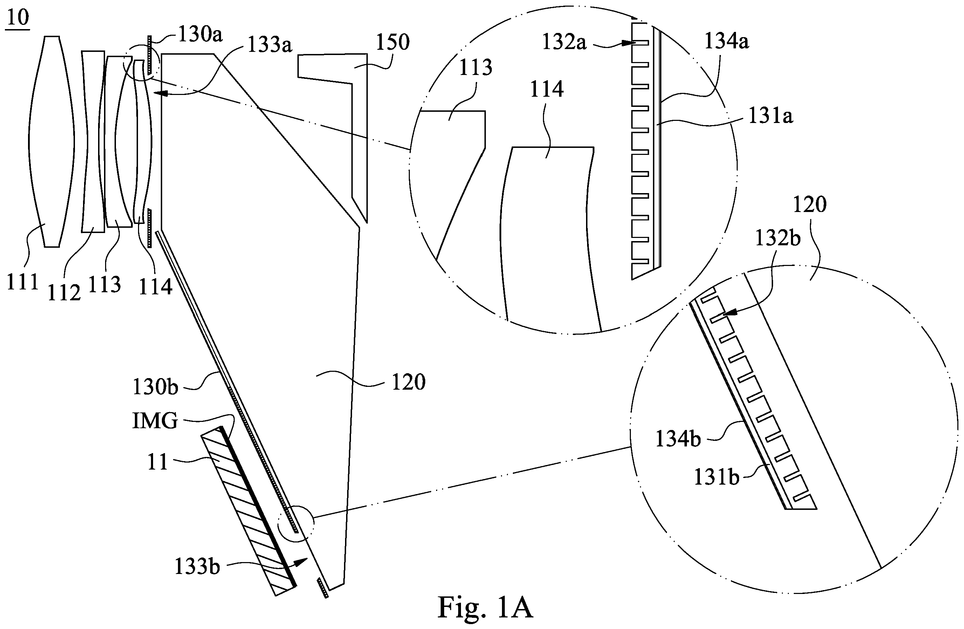

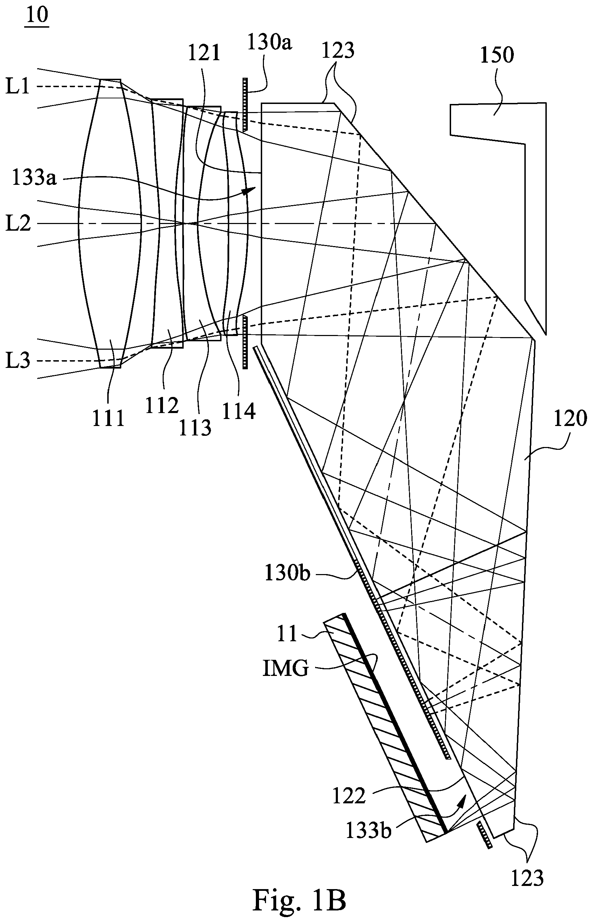

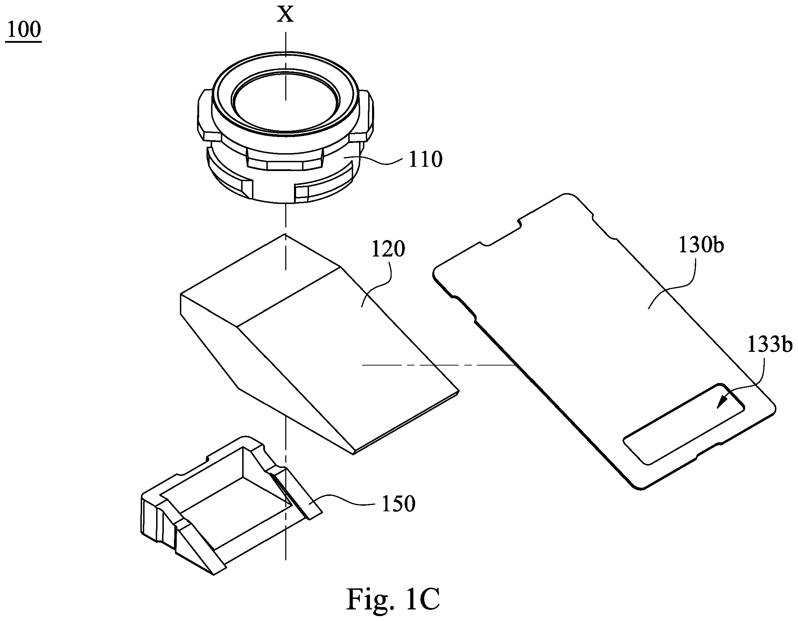

Fig. 1A is a schematic view of a camera module 10 according to the 1st embodiment of the present disclosure, and Fig. 1B is a schematic view of a light path of the camera module 10 according to the 1st embodiment in Fig. 1A. In Fig. 1A and Fig. 1B, the camera module 10 includes an imaging lens assembly module 100 (shown in Fig. 1C) and an image sensor 11, wherein the image sensor 11 is disposed on an image surface IMG of the imaging lens assembly module 100.

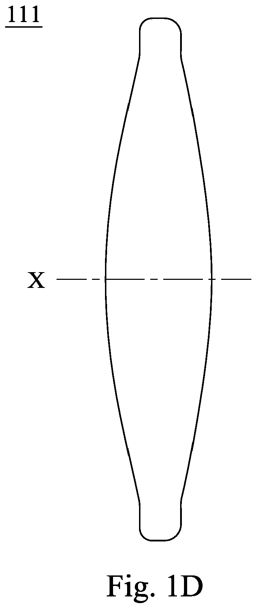

Fig. 1C is an exploded view of the imaging lens assembly module 100 according to the 1st embodiment in Fig. 1A, and Fig. 1D is a schematic view of lens element 111 being a molding glass lens element according to the 1st embodiment in Fig. 1A. In Fig. 1A to Fig. 1D, the imaging lens assembly module 100 includes an imaging lens element set 110, a light folding element 120 and two plate-shaped light blocking elements 130a, 130b, wherein the plate-shaped light blocking element 130a keeps an air distance between the plate-shaped light blocking element 130a and the light folding element 120, and the plate-shaped light blocking element 130b keeps an air distance between the plate-shaped light blocking element 130b and the light folding element 120. Moreover, the imaging lens element set 110 has an optical axis X and includes a plurality of lens elements 111, 112, 113, 114, wherein the lens elements 111, 112, 113, 114 can be plastic lens elements or molding lens elements, and the lens element 111 can further be a molding glass lens element (as shown in Fig. 1D). A number, a structure, a face-shape and other optical characteristics of the lens elements can be alternatively disposed to achieve a corresponding function, and other optical elements can be disposed on demand, but the present disclosure is not limited thereto.

In Fig. 1B, the light folding element 120 folds the optical axis X at least once, and the light folding element 120 includes an incident surface 121, an exit surface 122 and four optical reflecting surfaces 123. Specifically, the light enters the lens elements 111, 112, 113, 114 and enters the incident surface 121 of the light folding element 120 along light paths L1, L2, L3, and turn to the exit surface 122 through the optical reflecting surfaces 123, and an image is formed on the image surface IMG, but it is not limited to the light paths L1, L2, L3 revealed in Fig. 1B.

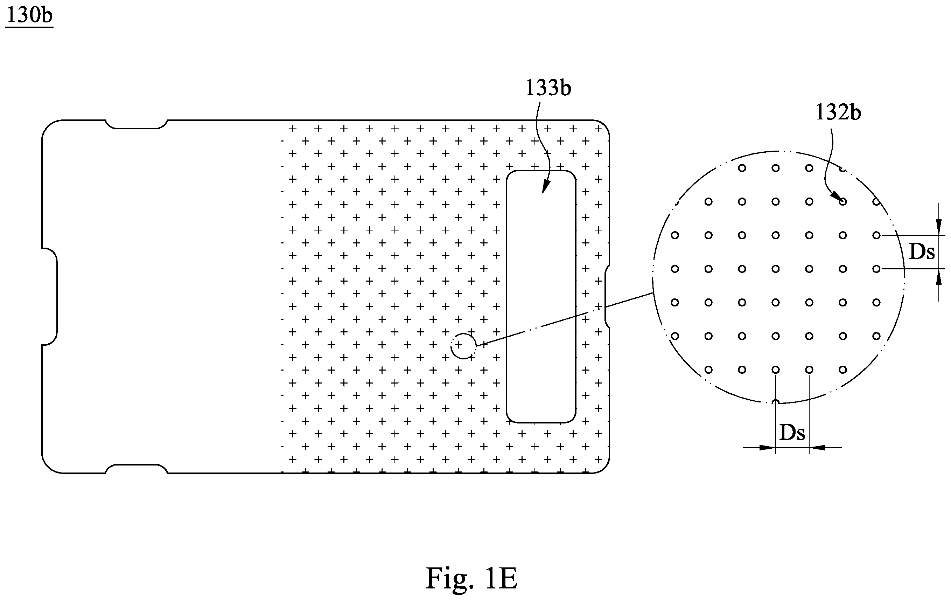

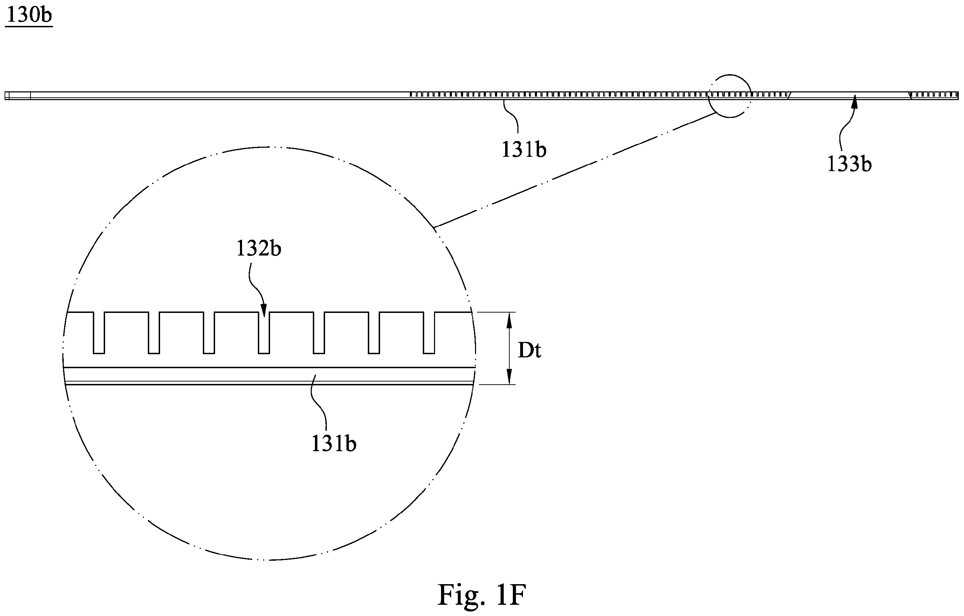

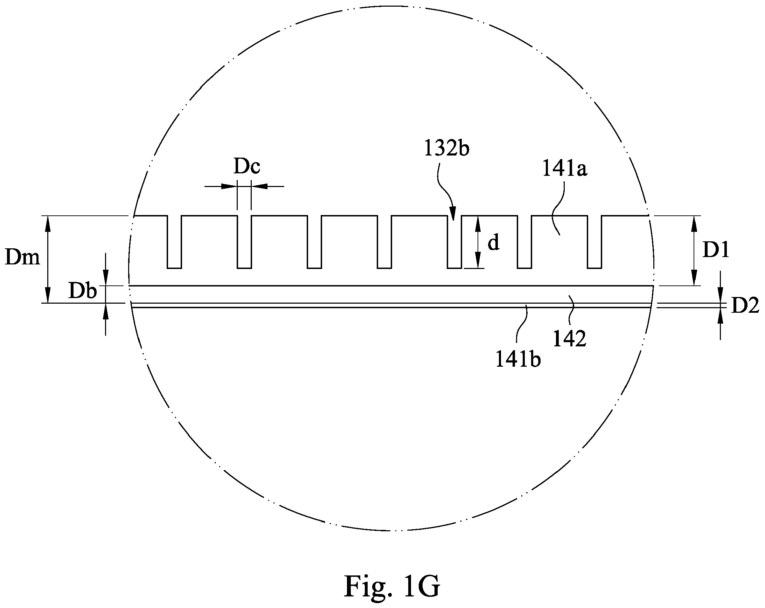

Fig. 1E is a partial enlarged view of the plate-shaped light blocking element 130b according to the 1st embodiment in Fig. 1A, Fig. 1F is an enlarged side view of the plate-shaped light blocking element 130b according to the 1st embodiment in Fig. 1A, and Fig. 1G is a partial enlarged view of the plate-shaped light blocking element 130b according to the 1st embodiment in Fig. 1F. In Fig. 1A to Fig. 1C and Fig. 1E to Fig. 1G, the plate-shaped light blocking element 130a includes at least two layered structures 131a and a plurality of columnar air structures 132a, and the plate-shaped light blocking element 130b includes at least two layered structures 131b and a plurality of columnar air structures 132b, wherein the layered structures 131a are disposed corresponding to the light folding element 120, the columnar air structures 132a are farther away from the light folding element 120 than a surface 134a of the plate-shaped light blocking element 130a from the light folding element 120, and the surface 134a of the plate-shaped light blocking element 130a faces toward the light folding element 120. The layered structures 131b are disposed corresponding to the lens element 114, the columnar air structures 132b are farther away from the lens element 114 than a surface 134b of the plate-shaped light blocking element 130b from the lens element 114, and the surface 134b of the plate-shaped light blocking element 130b faces toward the lens element 114.

It is favorable for preventing the generation of the non-imaging light by the plate-shaped light blocking elements 130a, 130b so as to reduce the flare, and also favorable for conducting the air distance between the plate-shaped light blocking element 130b and the light folding element 120 via the columnar air structures 132b. Furthermore, the columnar air structures 132a, 132b can be arranged in arrays, the columnar air structures 132a face toward the lens element 114 and the columnar air structures 132b face toward the light folding element 120, but the present disclosure is not limited thereto.

In Fig. 1G, a further explanation is given with the plate-shaped light blocking element 130b that the layered structures 131b can include two cladding layers and a base layer 142, wherein when a number of the layered structures 131b is two, one of the cladding layers is located on the base layer 142 along a direction parallel to the optical axis X, but the present disclosure is not limited thereto. In detail, the cladding layers are a first cladding layer 141a and a second cladding layer 141b, and the base layer 142 is disposed between the first cladding layer 141a and the second cladding layer 141b.

In Fig. 1A to Fig. 1C, Fig. 1E and Fig. 1F, the plate-shaped light blocking element 130a can further include an aperture structure 133a, the plate-shaped light blocking element 130b can further include an aperture structure 133b, wherein the aperture structure 133a is disposed corresponding to the lens element 114, the aperture structure 133b is disposed corresponding to the light folding element 120. Therefore, the light passing through the lens elements 111, 112, 113, 114 and the aperture structure 133a can be allowed to enter the incident surface 121, and the light passing through the exit surface 122 can be allowed to enter the aperture structure 133b.

In Fig. 1A to Fig, 1C, the imaging lens assembly module 100 can further include an assembling portion 150, wherein the assembling portion 150 is disposed corresponding to the surface 134a of the plate-shaped light blocking element 130a and the other surface of the plate-shaped light blocking element 130b, respectively. Further, the assembling portion 150 keeps a restrictedly predetermined air distance between each of the plate-shaped light blocking elements 130a, 130b and the light folding element 120. In detail, the assembling portion 150 can be a gum, a retainer or a mechanical design matching the plate-shaped light blocking elements 130a, 130b to keep the air distance between each of the plate-shaped light blocking elements 130a, 130b and the light folding element 120.

In Fig. 1E to Fig. 1G, a distance between adjacent two of the columnar air structures 132b is Ds, a thickness of the plate-shaped light blocking element 130b is Dt, a depth of each of the columnar air structures 132b is d, a sum of a thickness of one of the cladding layers (that is, the first cladding layer 141a) and a thickness of one of the base layer 142 is Dm, a diameter of each of the columnar air structures 132b is Dc, a thickness of the first cladding layer 141a is D1, a thickness of the second cladding layer 141b is D2, a thickness of the base layer 142 is Db, an area of the surface 134b of the plate-shaped light blocking element 130b is A, an area of a region with the columnar air structures 132b on the surface 134b of the plate-shaped light blocking element 130b is Ad, and the mentioned parameters satisfy the following conditions in Table 1.

| Table 1, 1st embodiment | | | |
|---|---|---|---|
| Ds (mm) | 0.08 | Db (mm) | 0.02 |
| Dt (mm) | 0.105 | A (mm$^2$) | 102.0012 |
| d (mm) | 0.06 | Ad (mm$^2$) | 55.5226 |
| Dm (mm) | 0.1 | Ad/A | 0.544 |
| Dc (mm) | 0.016 | d/Dt | 0.571 |
| D1 (mm) | 0.08 | Dm/Dt | 0.952 |
| D2 (mm) | 0.005 | | |

<2nd embodiment>

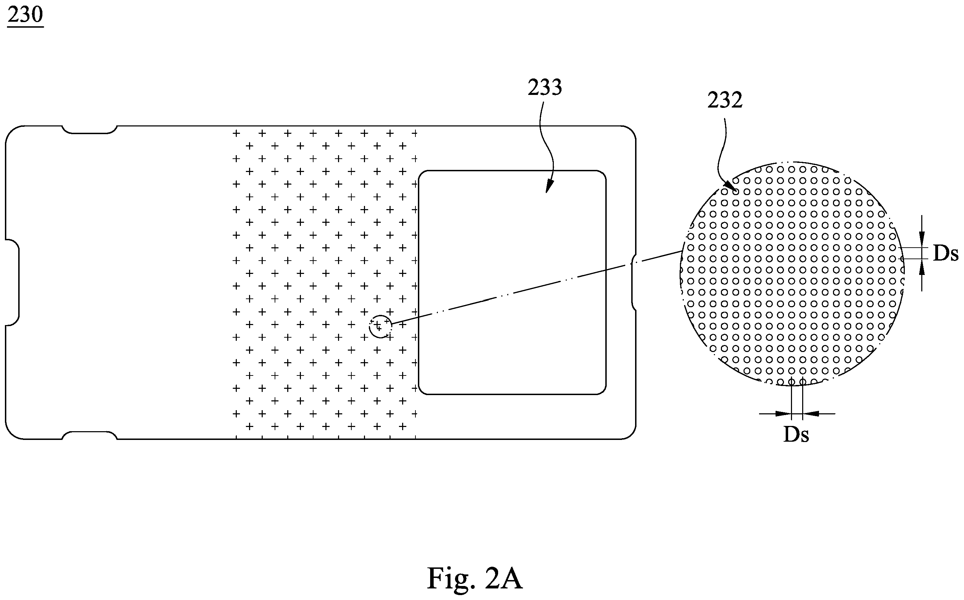

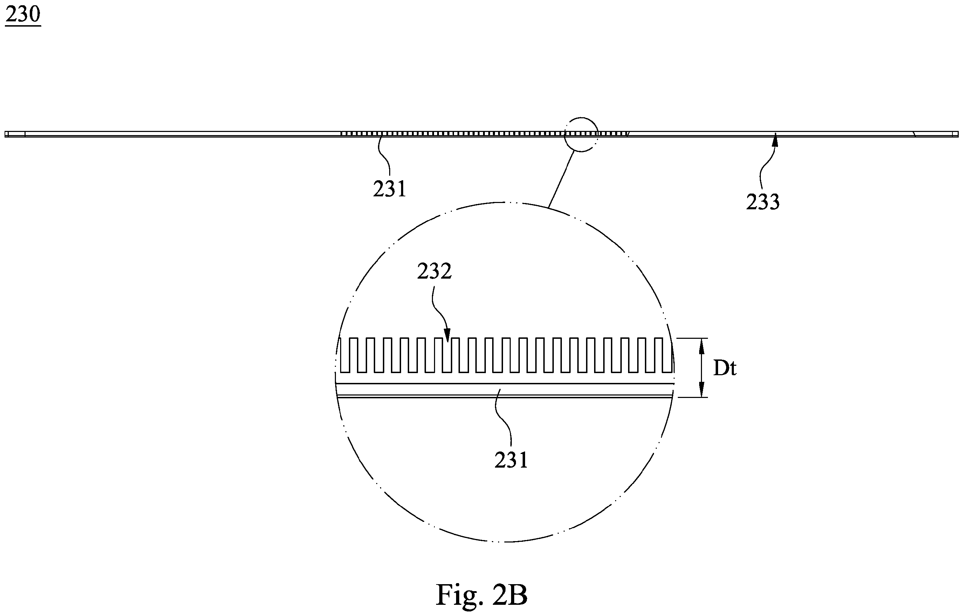

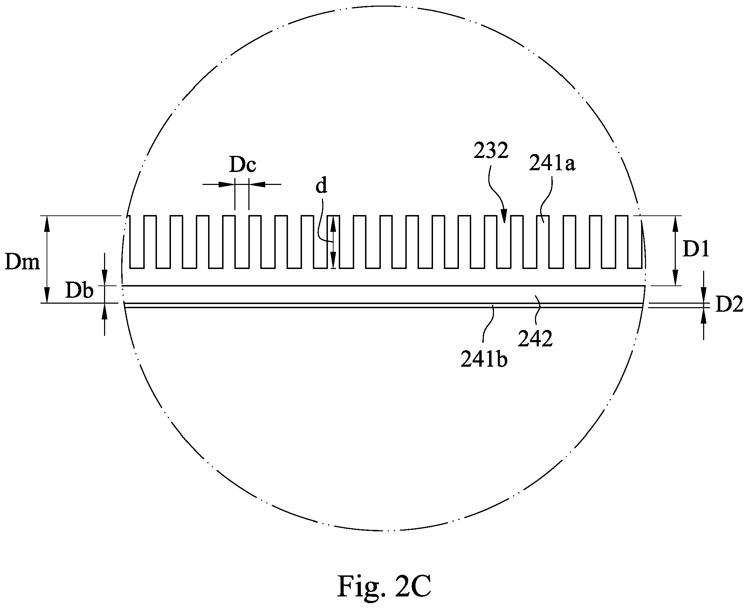

Fig. 2A is a partial enlarged view of a plate-shaped light blocking element 230 according to the 2nd embodiment of the present disclosure, Fig. 2B is an enlarged side view of the plate-shaped light blocking element 230 according to the 2nd embodiment in Fig. 2A, and Fig. 2C is a partial enlarged view of the plate-shaped light blocking element 230 according to the 2nd embodiment in Fig. 2B. In Fig. 2A to Fig. 2C, the plate-shaped light blocking element 230 includes at least two layered structures 231, a plurality of columnar air structures 232, and an aperture structure 233, wherein the layered structures 231 include at least one cladding layer and a base layer 242. When a number of the layered structures 231 is more than two, one of the cladding layer is located on the base layer 242 along a direction parallel to the optical axis (not shown), but the present disclosure is not limited thereto. It must be explained that the plate-shaped light blocking element 230 of the 2nd embodiment can be applied to the camera module 10 of the 1st embodiment, but the present disclosure is not limited thereto.

In detail, the cladding layers are a first cladding layer 241a and a second cladding layer 241b, and the base layer 242 is disposed between the first cladding layer 241a and the second cladding layer 241b.

In the 2nd embodiment, a distance between adjacent two of the columnar air structures 232 is Ds, a thickness of the plate-shaped light blocking element 230 is Dt, a depth of each of the columnar air structures 232 is d, a sum of a thickness of one of the cladding layers (that is, the first cladding layer 241a) and a thickness of one of the base layer 242 is Dm, a diameter of each of the columnar air structures 232 is Dc, a thickness of the first cladding layer 241a is D1, a thickness of the second cladding layer 241b is D2, a thickness of the base layer 242 is Db, an area of the surface of the plate-shaped light blocking element 230 is A, an area of a region with the columnar air structures 232 on the surface of the plate-shaped light blocking element 230 is Ad, and the mentioned parameters satisfy the following conditions in Table 2.

| Table 2, 2nd embodiment | | | |
|---|---|---|---|
| Ds (mm) | 0.03 | Db (mm) | 0.02 |
| Dt (mm) | 0.105 | A (mm$^2$) | 110.0652 |
| d (mm) | 0.06 | Ad (mm$^2$) | 42.9202 |
| Dm (mm) | 0.1 | Ad/A | 0.39 |
| Dc (mm) | 0.016 | d/Dt | 0.571 |
| D1 (mm) | 0.08 | Dm/Dt | 0.952 |
| D2 (mm) | 0.005 | | |

<3rd embodiment>

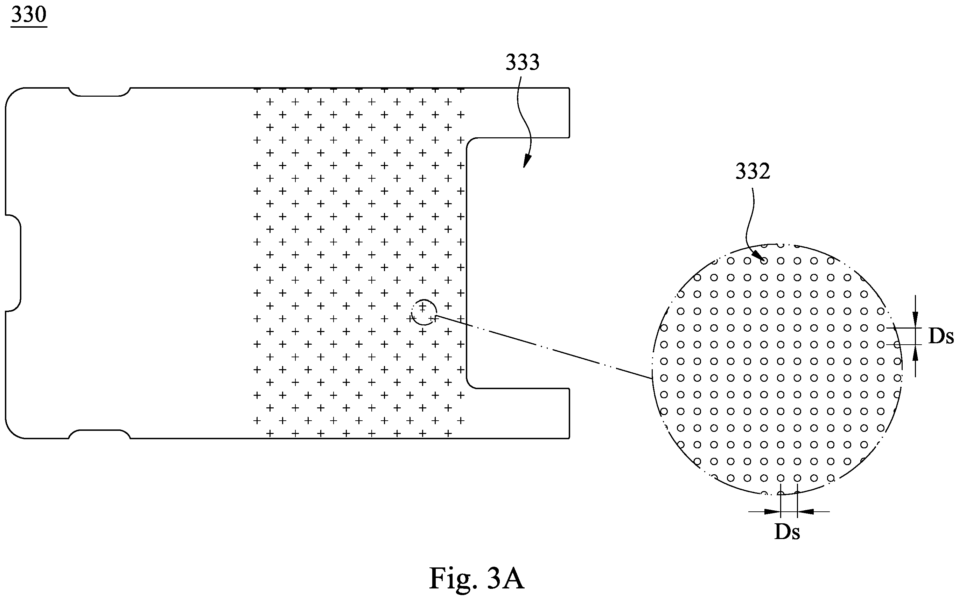

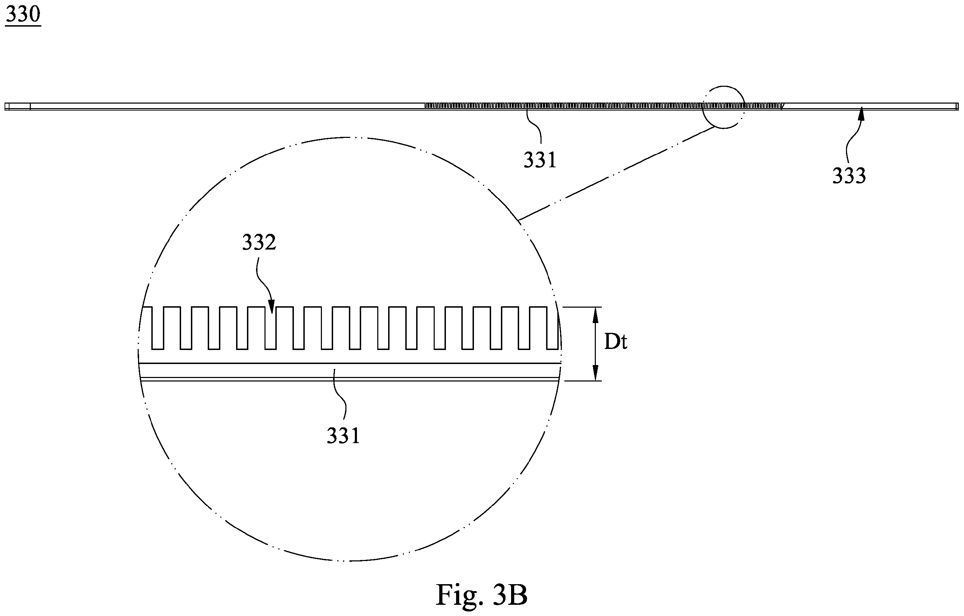

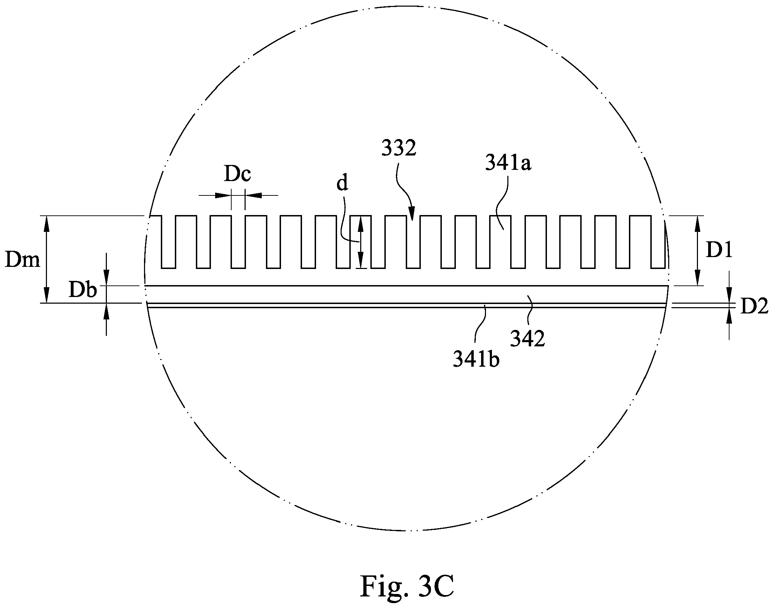

Fig. 3A is a partial enlarged view of a plate-shaped light blocking element 330 according to the 3rd embodiment of the present disclosure, Fig. 3B is an enlarged side view of the plate-shaped light blocking element 330 according to the 3rd embodiment in Fig. 3A, and Fig. 3C is a partial enlarged view of the plate-shaped light blocking element 330 according to the 3rd embodiment in Fig. 3B. In Fig. 3A to Fig. 3C, the plate-shaped light blocking element 330 includes at least two layered structures 331, a plurality of columnar air structures 332, and an aperture structure 333, wherein the layered structures 331 include at least one cladding layer and a base layer 342. When a number of the layered structures 331 is more than two, one of the cladding layers is located on the base layer 342 along a direction parallel to the optical axis (not shown), but the present disclosure is not limited thereto. It must be explained that the plate-shaped light blocking element 330 of the 3rd embodiment can be applied to the camera module 10 of the 1st embodiment, but the present disclosure is not limited thereto.
In detail, the cladding layers are a first cladding layer 341a and a second cladding layer 341b, and the base layer 342 is disposed between the first cladding layer 341a and the second cladding layer 341b.
In the 3rd embodiment, a distance between adjacent two of the columnar air structures 332 is Ds, a thickness of the plate-shaped light blocking element 330 is Dt, a depth of each of the columnar air structures 332 is d, a sum of a thickness of one of the cladding layers (that is, the first cladding layer 341a) and a thickness of one of the base layer 342 is Dm, a diameter of each of the columnar air structures 332 is Dc, a thickness of the first cladding layer 341a is D1, a thickness of the second cladding layer 341b is D2, a thickness of the base layer 342 is Db, an area of the surface of the plate-shaped light blocking element 330 is A, an area of a region with the columnar air structures 332 on the surface of the plate-shaped light blocking element 330 is Ad, and the mentioned parameters satisfy the following conditions in Table 3.

| Table 3, 3rd embodiment | | | |
|---|---|---|---|
| Ds (mm) | 0.04 | Db (mm) | 0.02 |
| Dt (mm) | 0.105 | A (mm$^2$) | 97.4057 |
| d (mm) | 0.06 | Ad (mm$^2$) | 42.8362 |
| Dm (mm) | 0.1 | Ad/A | 0.44 |
| Dc (mm) | 0.016 | d/Dt | 0.571 |
| D1 (mm) | 0.08 | Dm/Dt | 0.952 |
| D2 (mm) | 0.005 | | |

<4th embodiment>

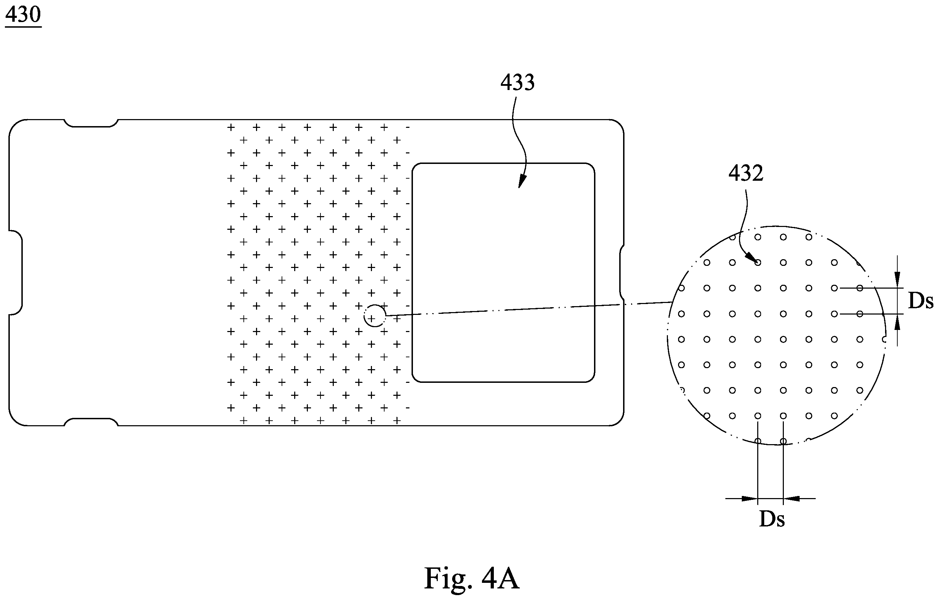

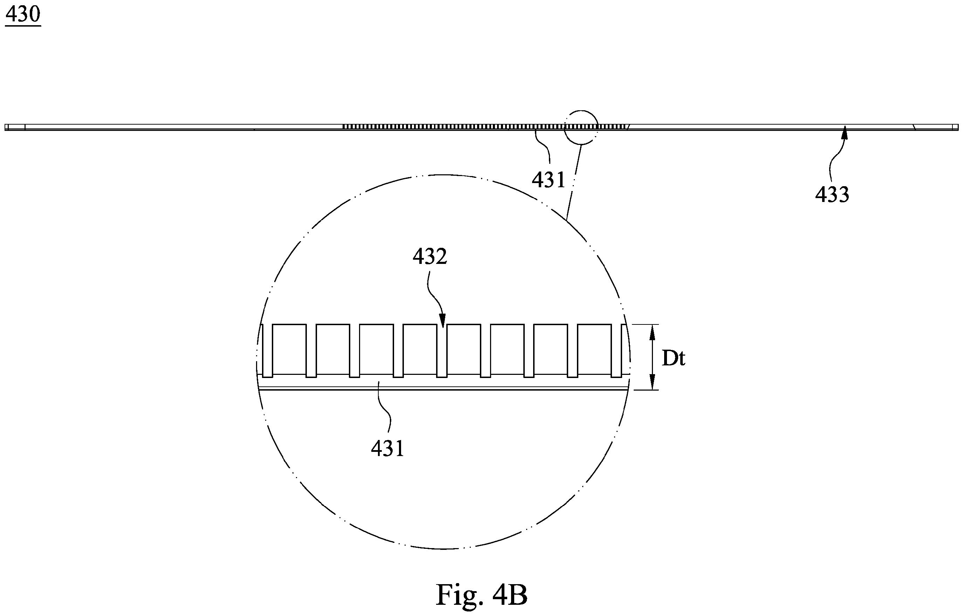

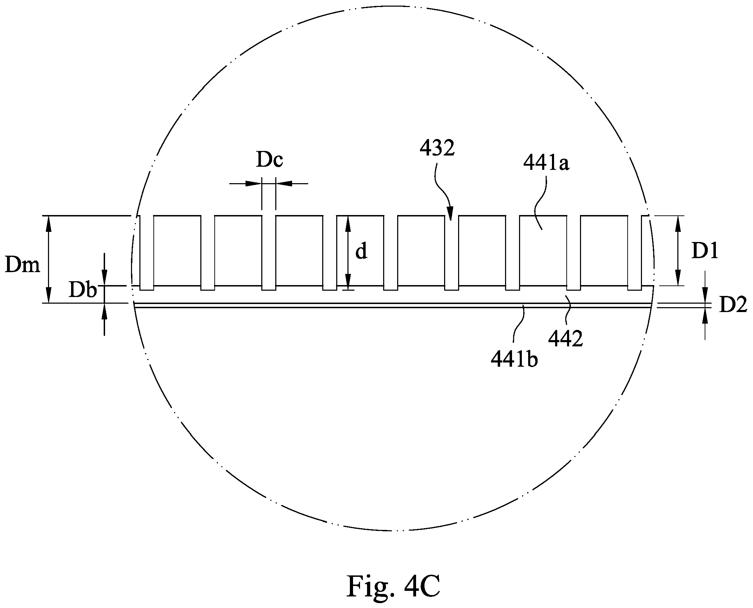

Fig. 4A is a partial enlarged view of a plate-shaped light blocking element 430 according to the 4th embodiment of the present disclosure, Fig. 4B is an enlarged side view of the plate-shaped light blocking element 430 according to the 4th embodiment in Fig. 4A, and Fig. 4C is a partial enlarged view of the plate-shaped light blocking element 430 according to the 4th embodiment in Fig. 4B. In Fig. 4A to Fig. 4C, the plate-shaped light blocking element 430 includes at least two layered structures 431, a plurality of columnar air structures 432, and an aperture structure 433, wherein the layered structures 431 include at least one cladding layer and a base layer 442. When a number of the layered structures 431 is more than two, one of the cladding layers is located on the base layer 442 along a direction parallel to the optical axis (not shown), but the present disclosure is not limited thereto. It must be explained that the plate-shaped light blocking element 430 of the 4th embodiment can be applied to the camera module 10 of the 1st embodiment, but the present disclosure is not limited thereto.

In detail, the cladding layers are a first cladding layer 441a and a second cladding layer 441b, and the base layer 442 is disposed between the first cladding layer 441a and the second cladding layer 441b.

In the 4th embodiment, a distance between adjacent two of the columnar air structures 432 is Ds, a thickness of the plate-shaped light blocking element 430 is Dt, a depth of each of the columnar air structures 432 is d, a sum of a thickness of one of the cladding layers (that is, the first cladding layer 441a) and a thickness of one of the base layer 442 is Dm, a diameter of each of the columnar air structures 432 is Dc, a thickness of the first cladding layer 441a is D1, a thickness of the second cladding layer 441b is D2, a thickness of the base layer 442 is Db, an area of the surface of the plate-shaped light blocking element 430 is A, an area of a region with the columnar air structures 432 on the surface of the plate-shaped light blocking element 430 is Ad, and the mentioned parameters satisfy the following conditions in Table 4.

| Table 4, 4th embodiment | | | |
|---|---|---|---|
| Ds (mm) | 0.07 | Db (mm) | 0.02 |
| Dt (mm) | 0.105 | A (mm$^2$) | 110.0652 |
| d (mm) | 0.085 | Ad (mm$^2$) | 42.9202 |
| Dm (mm) | 0.1 | Ad/A | 0.39 |
| Dc (mm) | 0.016 | d/Dt | 0.81 |
| D1 (mm) | 0.08 | Dm/Dt | 0.952 |
| D2 (mm) | 0.005 | | |

<5th embodiment>

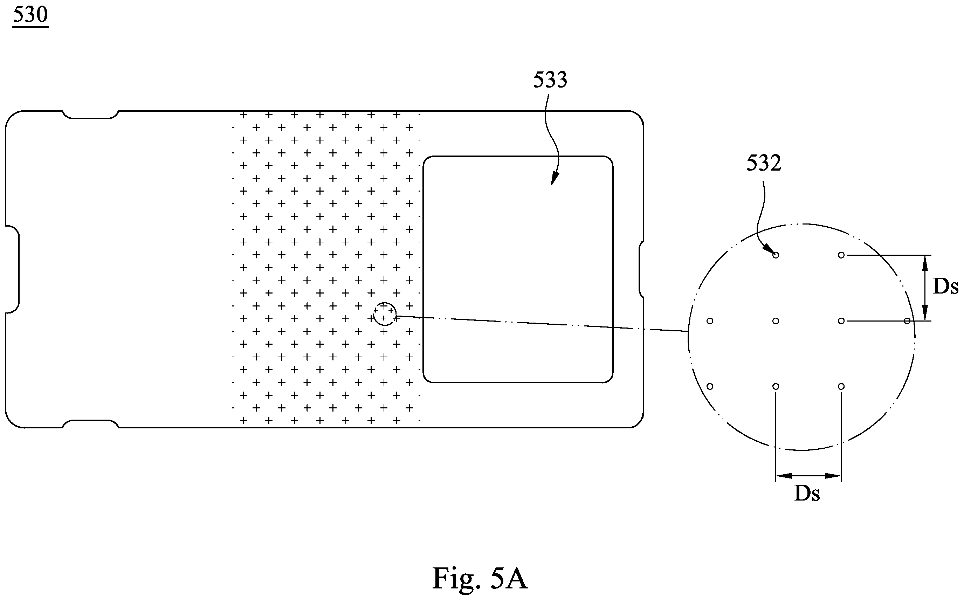

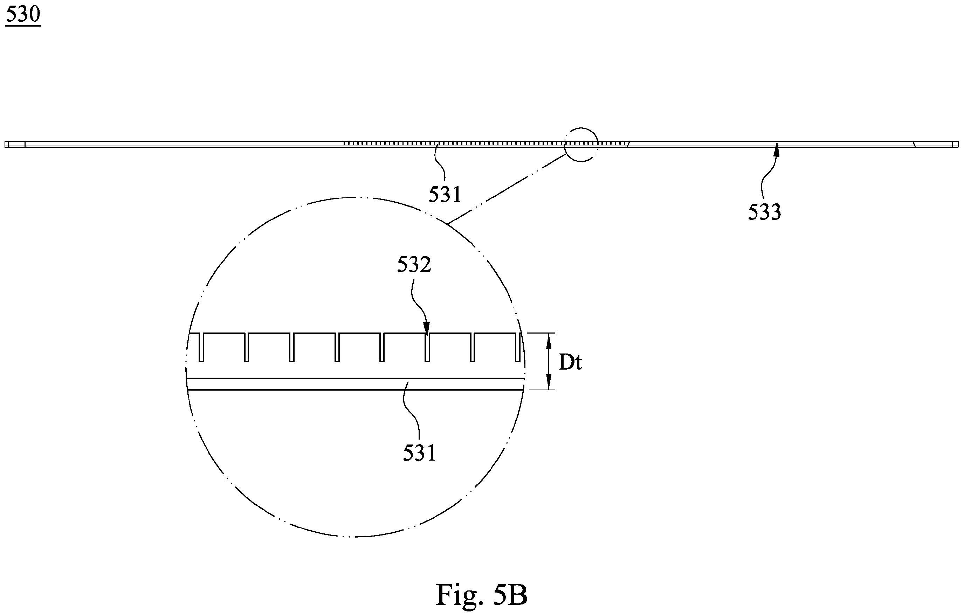

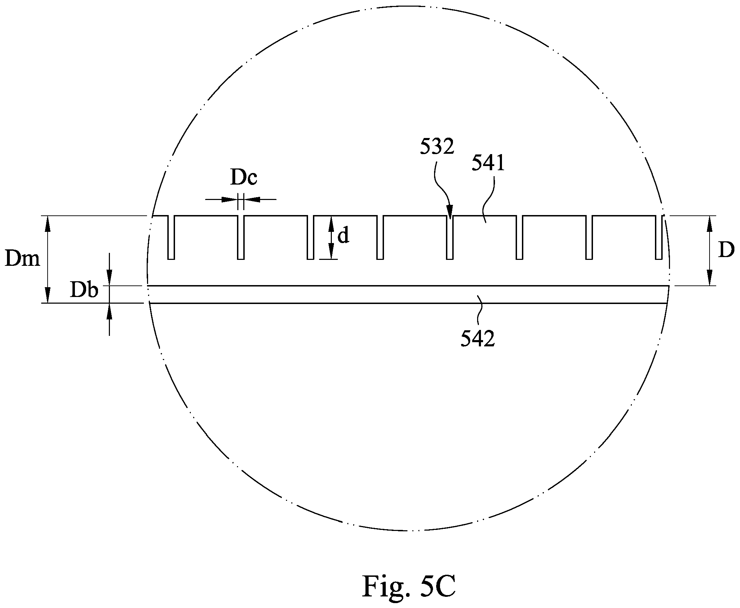

Fig. 5A is a partial enlarged view of a plate-shaped light blocking element 530 according to the 5th embodiment of the present disclosure, Fig. 5B is an enlarged side view of the plate-shaped light blocking element 530 according to the 5th embodiment in Fig. 5A, and Fig. 5C is a partial enlarged view of the plate-shaped light blocking element 530 according to the 5th embodiment in Fig. 5B. In Fig. 5A to Fig. 5C, the plate-shaped light blocking element 530 includes at least two layered structures 531, a plurality of columnar air structures 532, and an aperture structure 533, wherein the layered structures 531 include at least one cladding layer 541 and a base layer 542. According to the 5th embodiment, a number of the layered structures 531 of the plate-shaped light blocking element 530 can be two. It must be explained that the plate-shaped light blocking element 530 of the 5th embodiment can be applied to the camera module 10 of the 1st embodiment, but the present disclosure is not limited thereto.

Specifically, when the number of layered structures 531 is only two, the cladding layer 541 is located on the base layer 542 along a direction parallel to the optical axis (not shown), and the base layer 542 can be made of plastic material, but the present disclosure is not limited thereto.

In the 5th embodiment, a distance between adjacent two of the columnar air structures 532 is Ds, a thickness of the plate-shaped light blocking element 530 is Dt, a depth of each of the columnar air structures 532 is d, a sum of a thickness of one of the cladding layer 541 and a thickness of one of the base layer 542 is Dm, a diameter of each of the columnar air structures 532 is Dc, a thickness of the cladding layer 541 is D, a thickness of the base layer 542 is Db, an area of the surface of the plate-shaped light blocking element 530 is A, an area of a region with the columnar air structures 532 on the surface of the plate-shaped light blocking element 530 is Ad, and the mentioned parameters satisfy the following conditions in Table 5.

| Table 5, 5th embodiment | | | |
|---|---|---|---|
| Ds (mm) | 0.08 | Db (mm) | 0.02 |
| Dt (mm) | 0.1 | A (mm$^2$) | 110.0652 |
| d (mm) | 0.05 | Ad (mm$^2$) | 42.9202 |
| Dm (mm) | 0.1 | Ad/A | 0.39 |
| Dc (mm) | 0.007 | d/Dt | 0.5 |
| D (mm) | 0.08 | Dm/Dt | 1 |

<6th embodiment>

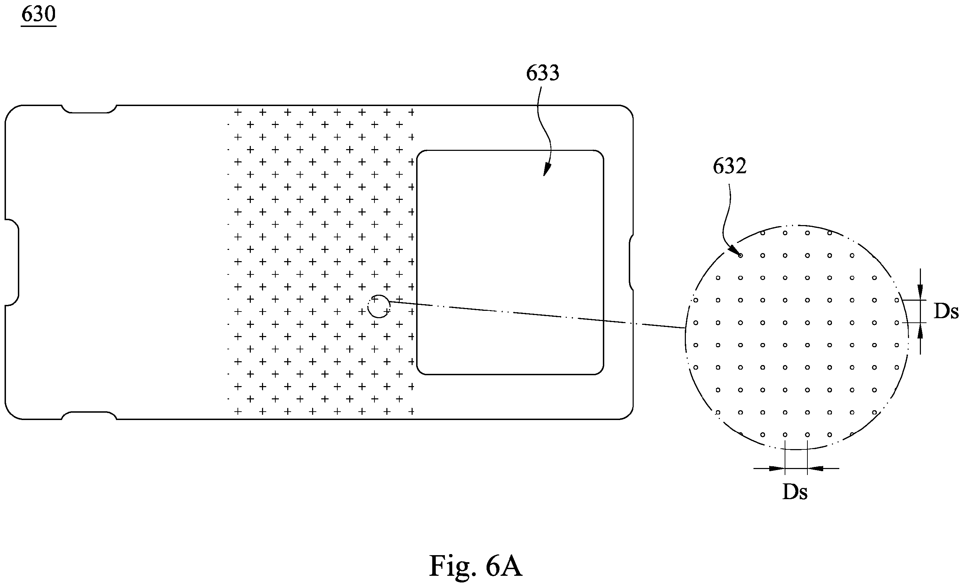

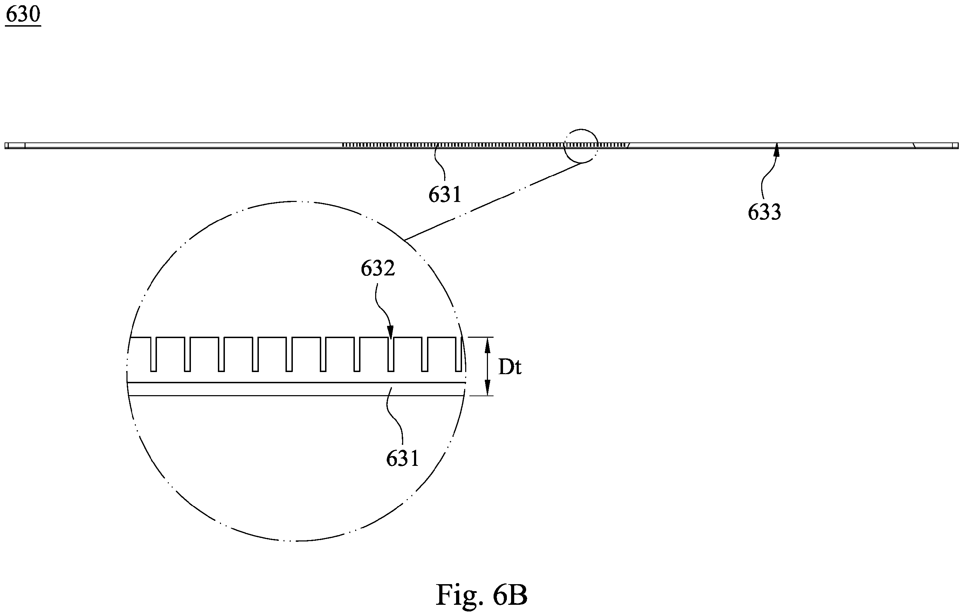

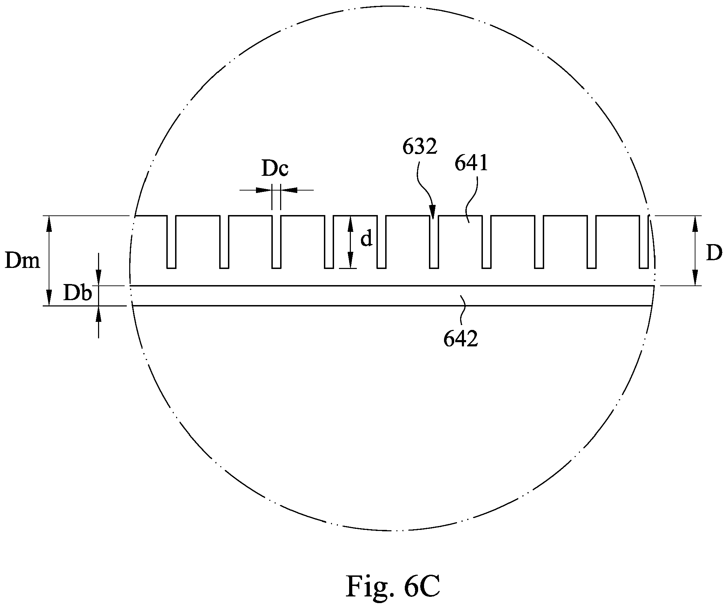

Fig. 6A is a partial enlarged view of a plate-shaped light blocking element 630 according to the 6th embodiment of the present disclosure, Fig. 6B is an enlarged side view of the plate-shaped light blocking element 630 according to the 6th embodiment in Fig. 6A, and Fig. 6C is a partial enlarged view of the plate-shaped light blocking element 630 according to the 6th embodiment in Fig. 6B. In Fig. 6A to Fig. 6C, the plate-shaped light blocking element 630 includes at least two layered structures 631, a plurality of columnar air structures 632, and an aperture structure 633, wherein the layered structures 631 include at least one cladding layer 641 and a base layer 642. According to the 6th embodiment, a number of the layered structures 631 of the plate-shaped light blocking element 630 can be two. It must be explained that the plate-shaped light blocking element 630 of the 6th embodiment can be applied to the camera module 10 of the 1st embodiment, but the present disclosure is not limited thereto.

Specifically, when the number of layered structures 631 is only two, the cladding layers 641 is located on the base layer 642 along a direction parallel to the optical axis (not shown), and the base layer 642 can be made of metal material, such as brass, cold-rolled steel, etc., but the present disclosure is not limited thereto.

In the 6th embodiment, a distance between adjacent two of the columnar air structures 632 is Ds, a thickness of the plate-shaped light blocking element 630 is Dt, a depth of each of the columnar air structures 632 is d, a sum of a thickness of one of the cladding layer 641 and a thickness of one of the base layer 642 is Dm, a diameter of each of the columnar air structures 632 is Dc, a thickness of the cladding layer 641 is D, a thickness of the base layer 642 is Db, an area of the surface of the plate-shaped light blocking element 630 is A, an area of a region with the columnar air structures 632 on the surface of the plate-shaped light blocking element 630 is Ad, and the mentioned parameters satisfy the following conditions in Table 6.

| Table 6, 6th embodiment | | | |
|---|---|---|---|
| Ds (mm) | 0.06 | Db (mm) | 0.023 |
| Dt (mm) | 0.103 | A (mm$^2$) | 110.0652 |
| d (mm) | 0.06 | Ad (mm$^2$) | 42.9202 |
| Dm (mm) | 0.103 | Ad/A | 0.39 |
| Dc (mm) | 0.01 | d/Dt | 0.583 |
| D (mm) | 0.08 | Dm/Dt | |

<7th embodiment>

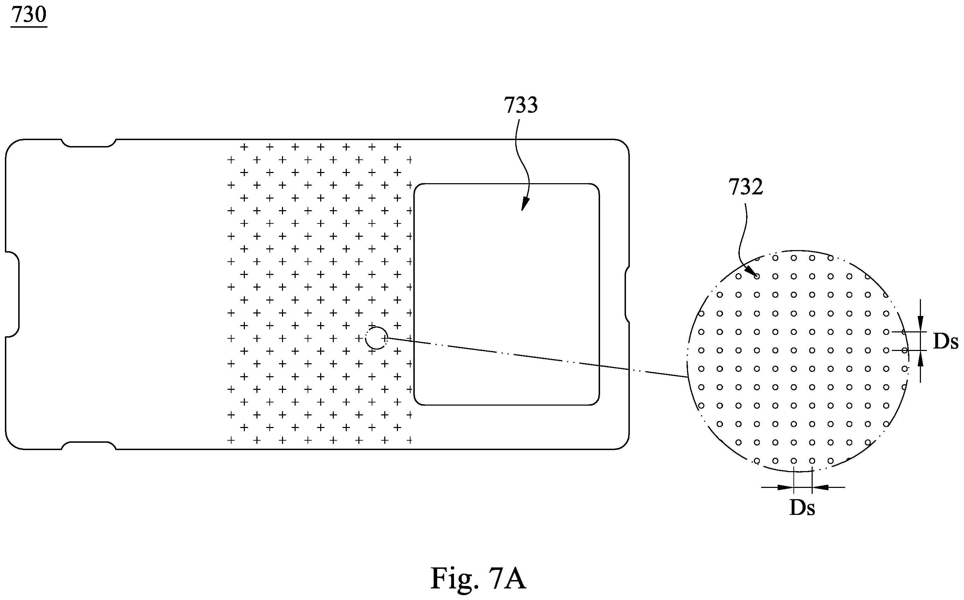

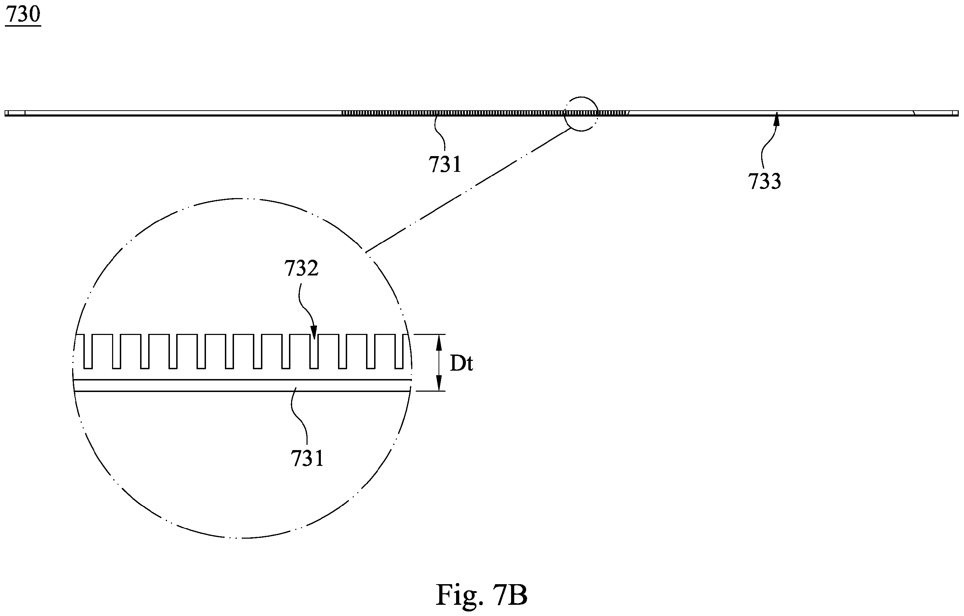

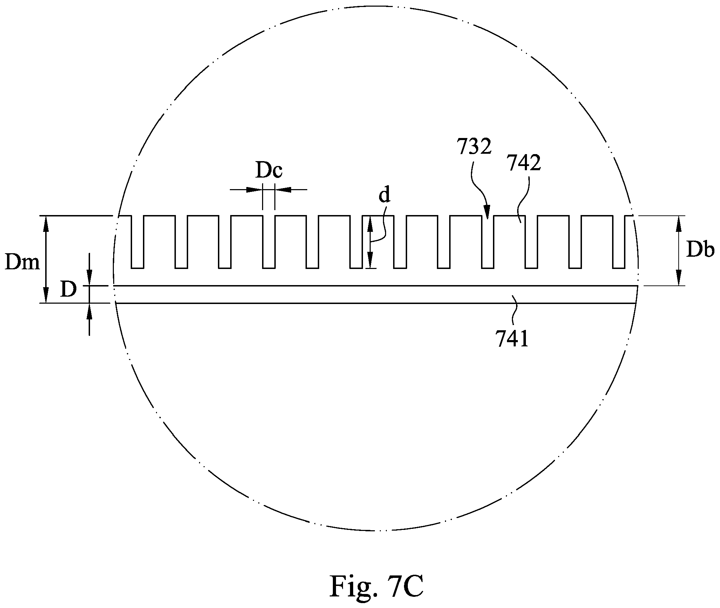

Fig. 7A is a partial enlarged view of a plate-shaped light blocking element 730 according to the 7th embodiment of the present disclosure, Fig. 7B is an enlarged side view of the plate-shaped light blocking element 730 according to the 7th embodiment in Fig. 7A, and Fig. 7C is a partial enlarged view of the plate-shaped light blocking element 730 according to the 7th embodiment in Fig. 7B. In Fig. 7A to Fig. 7C, the plate-shaped light blocking element 730 includes at least two layered structures 731, a plurality of columnar air structures 732, and an aperture structure 733, wherein the layered structures 731 include at least one cladding layer 741 and a base layer 742. According to the 7th embodiment, a number of the layered structures 731 of the plate-shaped light blocking element 730 can be two. It must be explained that the plate-shaped light blocking element 730 of the 7th embodiment can be applied to the camera module 10 of the 1st embodiment, but the present disclosure is not limited thereto.

Specifically, when the number of layered structures 731 is only two, the cladding layers 741 is located below the base layer 742 along a direction parallel to the optical axis (not shown).

In the 7th embodiment, a distance between adjacent two of the columnar air structures 732 is Ds, a thickness of the plate-shaped light blocking element 730 is Dt, a depth of each of the columnar air structures 732 is d, a sum of a thickness of one of the cladding layer 741 and a thickness of one of the base layer 742 is Dm, a diameter of each of the columnar air structures 732 is Dc, a thickness of the cladding layer 741 is D, a thickness of the base layer 742 is Db, an area of the surface of the plate-shaped light blocking element 730 is A, an area of a region with the columnar air structures 732 on the surface of the plate-shaped light blocking element 730 is Ad, and the mentioned parameters satisfy the following conditions in Table 7.

| Table 7, 7th embodiment | | | |
|---|---|---|---|
| Ds (mm) | 0.05 | Db (mm) | 0.08 |

(continued)

| Table 7, 7th embodiment | | | |
|---|---|---|---|
| Dt (mm) | 0.1 | A (mm$^2$) | 110.0652 |
| d (mm) | 0.06 | Ad (mm$^2$) | 42.9202 |
| Dm (mm) | 0.1 | Ad/A | 0.39 |
| Dc (mm) | 0.014 | d/Dt | 0.60 |
| D (mm) | 0.02 | Dm/Dt | 1 |

<8th embodiment>

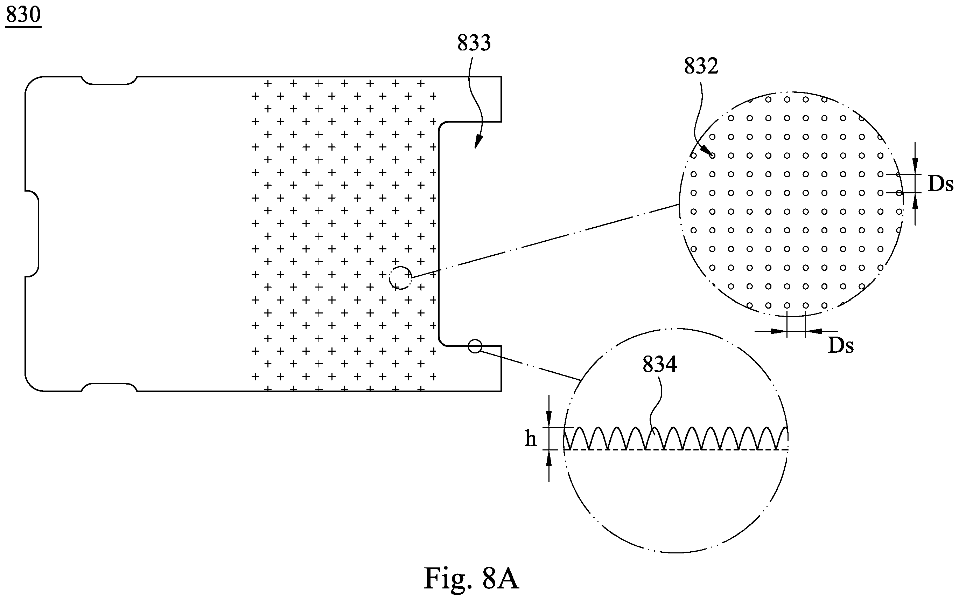

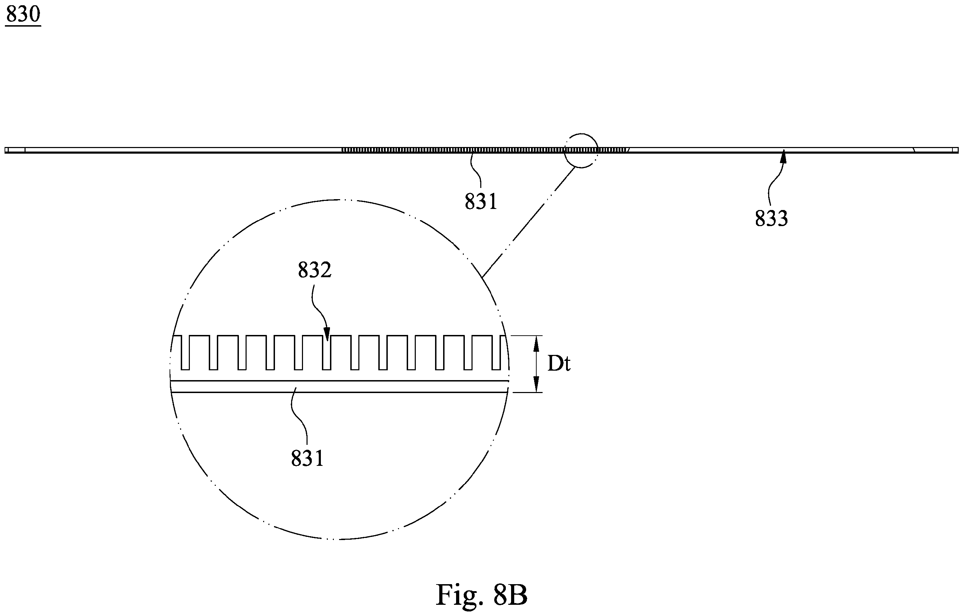

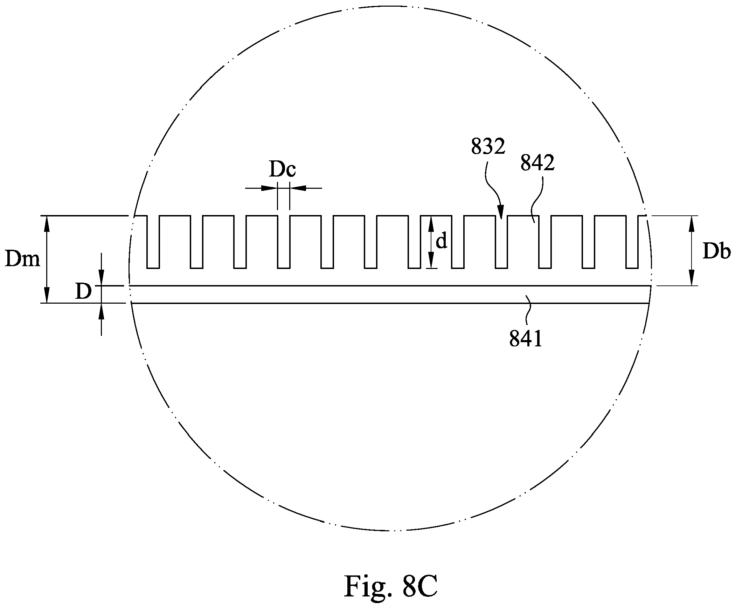

Fig. 8A is a partial enlarged view of a plate-shaped light blocking element 830 according to the 8th embodiment of the present disclosure, Fig. 8B is an enlarged side view of the plate-shaped light blocking element 830 according to the 8th embodiment in Fig. 8A, and Fig. 8C is a partial enlarged view of the plate-shaped light blocking element 830 according to the 8th embodiment in Fig. 8B. In Fig. 8A to Fig. 8C, the plate-shaped light blocking element 830 includes at least two layered structures 831, a plurality of columnar air structures 832, and an aperture structure 833, wherein the layered structures 831 include at least one cladding layer 841 and a base layer 842. According to the 8th embodiment, a number of the layered structures 831 of the plate-shaped light blocking element 830 can be two. It must be explained that the plate-shaped light blocking element 830 of the 8th embodiment can be applied to the camera module 10 of the 1st embodiment, but the present disclosure is not limited thereto.

Specifically, when the number of layered structures 831 is only two, the cladding layers 841 is located below the base layer 842 along a direction parallel to the optical axis (not shown).

In Fig. 8A, the aperture structure 833 can include a light blocking structure 834, and the light blocking structure 834 includes a plurality of protrusions. Therefore, it is favorable for reducing the generation of the non-imaging light via the light blocking structure 834.

In the 8th embodiment, a distance between adjacent two of the columnar air structures 832 is Ds, a thickness of the plate-shaped light blocking element 830 is Dt, a depth of each of the columnar air structures 832 is d, a sum of a thickness of one of the cladding layers 841 and a thickness of one of the base layer 842 is Dm, a diameter of each of the columnar air structures 832 is Dc, a thickness of the cladding layer 841 is D, a thickness of the base layer 842 is Db, an area of the surface of the plate-shaped light blocking element 830 is A, an area of a region with the columnar air structures 832 on the surface of the plate-shaped light blocking element 830 is Ad, an average maximum height of the light blocking structure 834 is h, and the mentioned parameters satisfy the following conditions in Table 8.

| Table 8, 8th embodiment | | | |
|---|---|---|---|
| Ds (mm) | 0.05 | A (mm$^2$) | 95.5687 |
| Dt (mm) | 0.1 | Ad (mm$^2$) | 42.9202 |
| d (mm) | 0.06 | Ad/A | 0.449 |
| Dm (mm) | 0.1 | d/Dt | 0.60 |
| Dc (mm) | 0.014 | Dm/Dt | 1 |
| D (mm) | 0.02 | h (mm) | 0.012 |
| Db (mm) | 0.08 | | |

<9th embodiment>

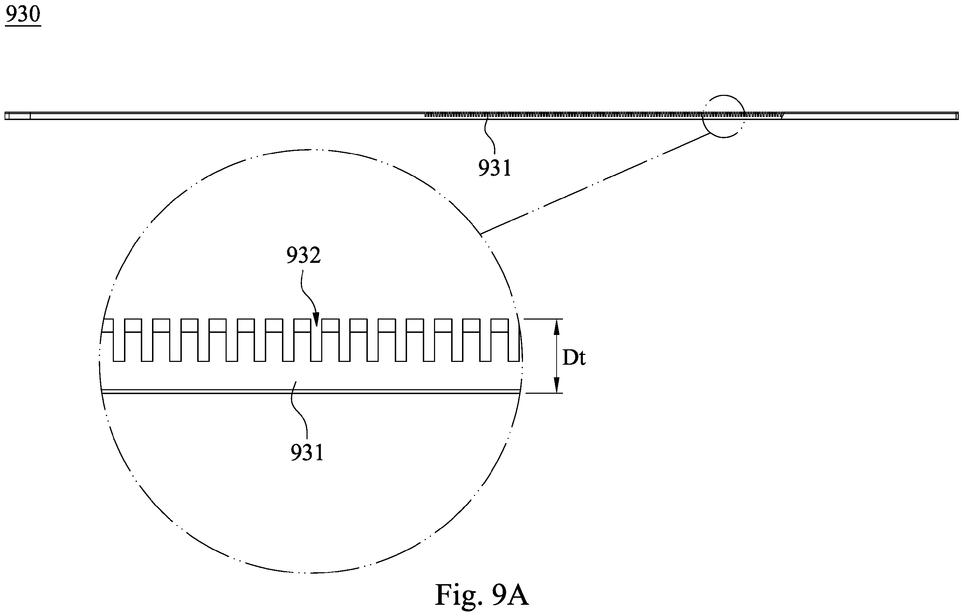

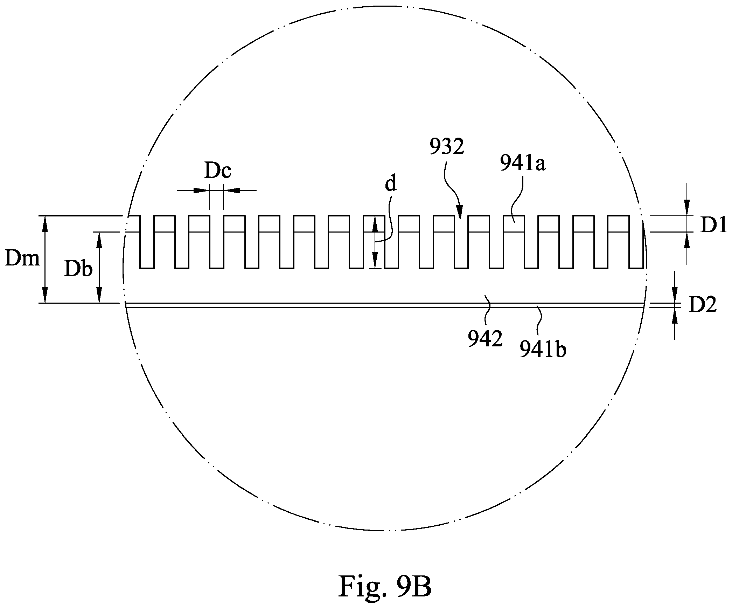

Fig. 9A is an enlarged side view of a plate-shaped light blocking element 930 according to the 9th embodiment of the present disclosure, and Fig. 9B is a partial enlarged view of the plate-shaped light blocking element 930 according to the 9th embodiment in Fig. 9A. In Fig. 9A and Fig. 9B, the plate-shaped light blocking element 930 includes at least two layered structures 931 and a plurality of columnar air structures 932, wherein the layered structures 931 include at least one cladding layer and a base layer 942. When a number of the layered structures 931 is more than two, one of the cladding layers is located on the base layer 942 along a direction parallel to the optical axis (not shown), but the present disclosure is not limited thereto. It must be explained that the plate-shaped light blocking element 930 of the 9th embodiment can be applied to the camera module 10 of the 1st embodiment, but the present disclosure is not limited thereto.

In detail, the cladding layers are a first cladding layer 941a and a second cladding layer 941b, and the base layer 942 is disposed between the first cladding layer 941a and the second cladding layer 941b.

In the 9th embodiment, a thickness of the plate-shaped light blocking element 930 is Dt, a depth of each of the columnar air structures 932 is d, a sum of a thickness of one of the cladding layers (that is, the first cladding layer 941a) and a thickness of one of the base layer 942 is Dm, a diameter of each of the columnar air structures 932 is Dc, a thickness of the first cladding layer 941a is D1, a thickness of the second cladding layer 941b is D2, a thickness of the base layer 942 is Db, and the mentioned parameters satisfy the following conditions in Table 9.

| Table 9, 9th embodiment | | | |
|---|---|---|---|
| Dt (mm) | 0.105 | D2 (mm) | 0.005 |
| d (mm) | 0.06 | Db (mm) | 0.081 |
| Dm (mm) | 0.1 | d/Dt | 0.571 |
| Dc (mm) | 0.016 | Dm/Dt | 0.952 |
| D1 (mm) | 0.019 | | |

≤10th embodiment>

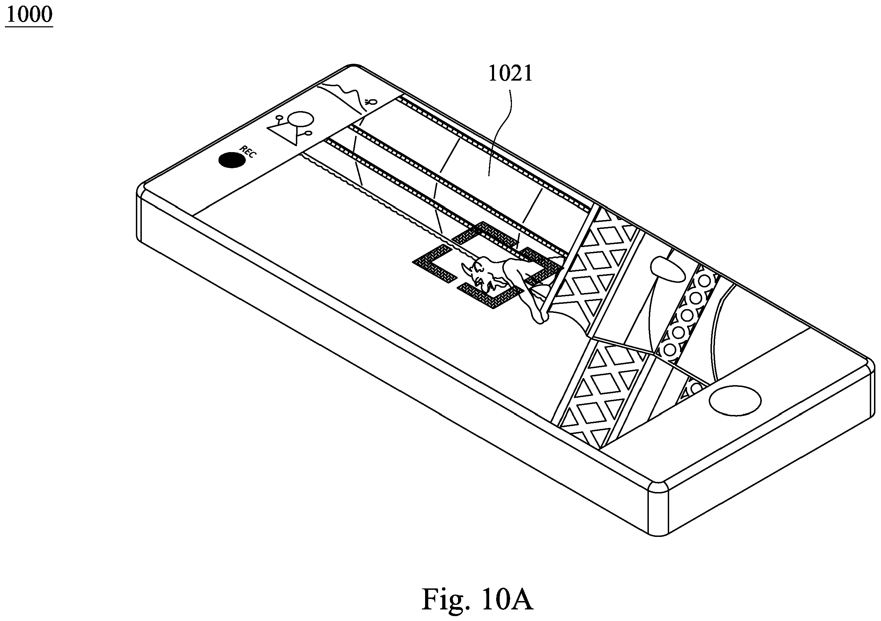

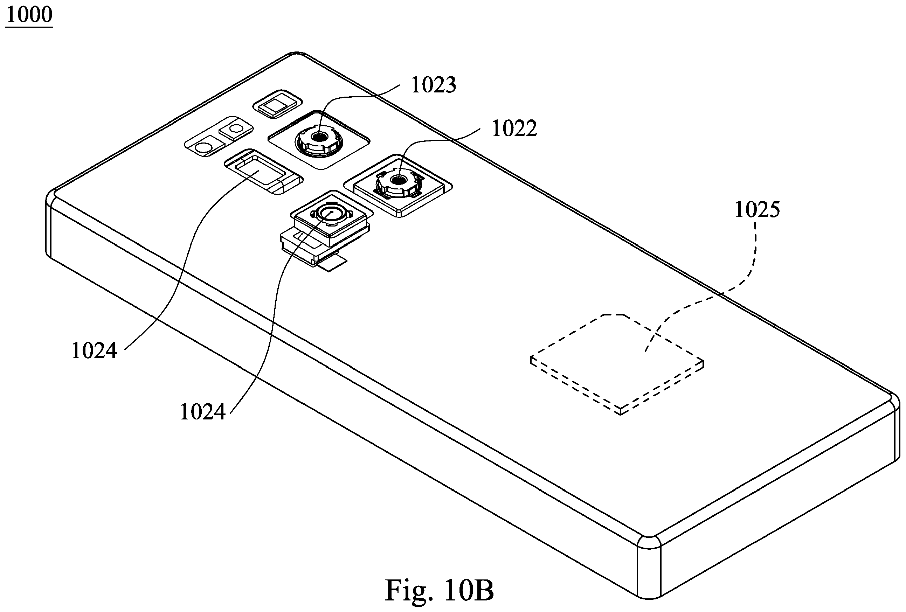

Fig. 10A is a schematic view of an electronic device 1000 according to the 10th embodiment of the present disclosure, and Fig. 10B is another schematic view of the electronic device 1000 according to the 10th embodiment in Fig. 10A. In Fig. 10A and Fig. 10B, the electronic device 1000 is a smart phone, and the electronic device 1000 includes camera modules and a user interface 1021, wherein the camera module includes an imaging lens assembly module and an image sensor, and the image sensor is disposed on an image surface of the imaging lens assembly module. Furthermore, the imaging lens assembly module includes an imaging lens element set and a plate-shaped light blocking element. Moreover, the camera modules are an ultra-wide angle camera module 1022, a high resolution camera module 1023 and a telephoto camera module 1024, and the user interface 1021 is a touch screen, but the present disclosure is not limited thereto. Particularly, the plate-shaped light blocking element can be the plate-shaped light blocking element according to any one of the aforementioned 1st embodiment to the 9th embodiment, but the present disclosure is not limited thereto.

A user enters a shooting mode via the user interface 1021, wherein the user interface 1021 is configured to display an image, and the shooting angle can be manually adjusted to switch to different camera modules. At this moment, the imaging light is gathered on an image sensor via the camera module, and an electronic signal about an image is output to an image signal processor (ISP) 1025.

In Fig. 10B, in order to meet a camera specification of the electronic device 1000, the electronic device 1000 can further include an optical anti-shake mechanism (not shown). Furthermore, the electronic device 1000 can further include at least one focusing assisting module (not shown) and at least one sensing element (not shown). The focusing assisting module can be a flash module (not shown) for compensating a color temperature, an infrared distance measurement component, a laser focus module and so on. The sensing element can have functions for sensing physical momentum and kinetic energy, such as an accelerator, a gyroscope, a Hall Effect Element, to sense shaking or jitters applied by hands of the users or external environments. Accordingly, the camera module of the electronic device 1000 equipped with an auto-focusing mechanism and the optical anti-shake mechanism can be enhanced to achieve the superior image quality. Furthermore, the electronic device 1000 according to the present disclosure can have a capturing function with multiple modes, such as taking optimized selfies, high dynamic range (HDR) under a low light condition, 4K resolution recording and so on. Furthermore, the user can visually see a captured image of the camera via the user interface 1021 and manually operate the view finding range on the user interface 1021 to achieve the autofocus function of what you see is what you get.

Moreover, the camera module, the optical anti-shake mechanism, the sensing element and the focusing assisting module can be disposed on a flexible printed circuit board (FPC) (not shown) and electrically connected to the image signal processor 1025 and other related components, via a connector (not shown) to perform a capturing process. Since the current electronic devices, such as smart phones, have a tendency of being compact, the way of firstly disposing the camera module and related components on the flexible printed circuit board and secondly integrating the circuit thereof into the main board of the electronic device via the connector can satisfy the requirements of the mechanical design and the circuit layout of the limited space inside the electronic device, and obtain more margins. The autofocus function of the camera module can also be controlled more flexibly via the touch screen of the electronic device. According to the 10th embodiment, the electronic device 1000 can include a plurality of sensing elements and a plurality of focusing assisting modules. The sensing elements and the focusing assisting modules are disposed on the flexible printed circuit board and at least one other flexible printed circuit board (not shown) and electrically connected to the image signal processor 1025 and other related components, via corresponding connectors to perform the capturing process. In other embodiments (not shown), the sensing elements and the focusing assisting modules can also be disposed on the main board of the electronic device or carrier boards of other types according to requirements of the mechanical design and the circuit layout.

Furthermore, the electronic device 1000 can further include, but not be limited to, a display, a control unit, a storage unit, a random access memory (RAM), a read-only memory (ROM), or the combination thereof.

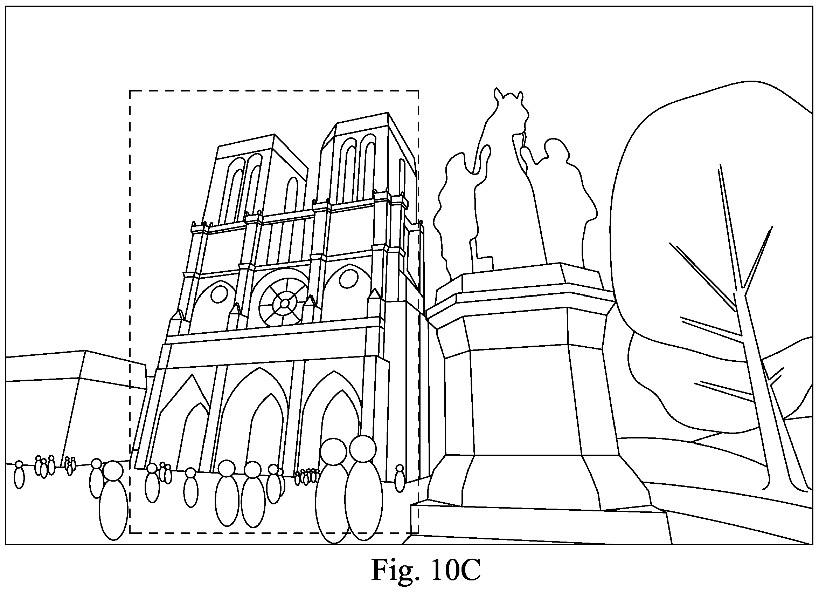

Fig. 10C is a schematic view of an image captured via the electronic device 1000 according to the 10th embodiment in Fig. 10B. In Fig. 10C, the larger range of the image can be captured via the ultra-wide angle camera module 1022, and the ultra-wide angle camera module 1022 has the function of accommodating wider range of the scene.

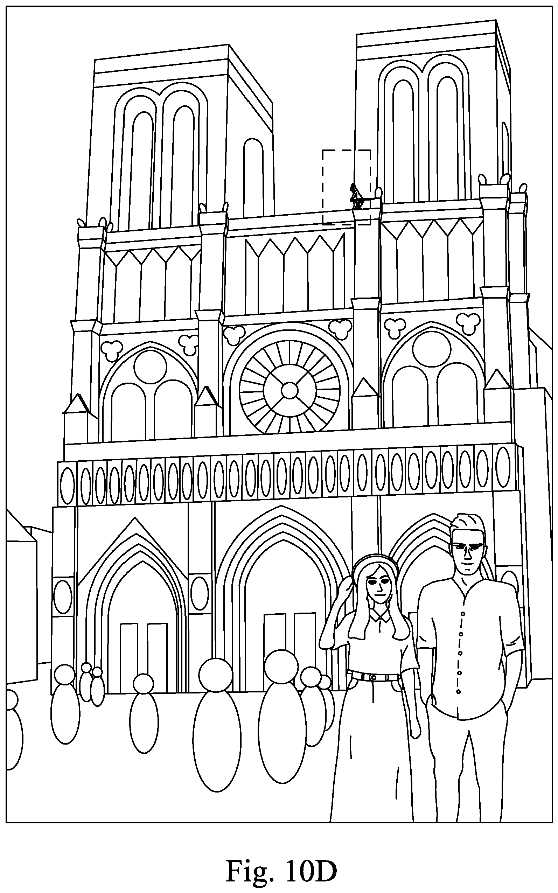

Fig. 10D is a schematic view of another image captured via the electronic device 1000 according to the 10th embodiment in Fig. 10B. In Fig. 10D, the image of the certain range with the high resolution can be captured via the high resolution camera module 1023, and the high resolution camera module 1023 has the function of the high resolution and the low deformation.

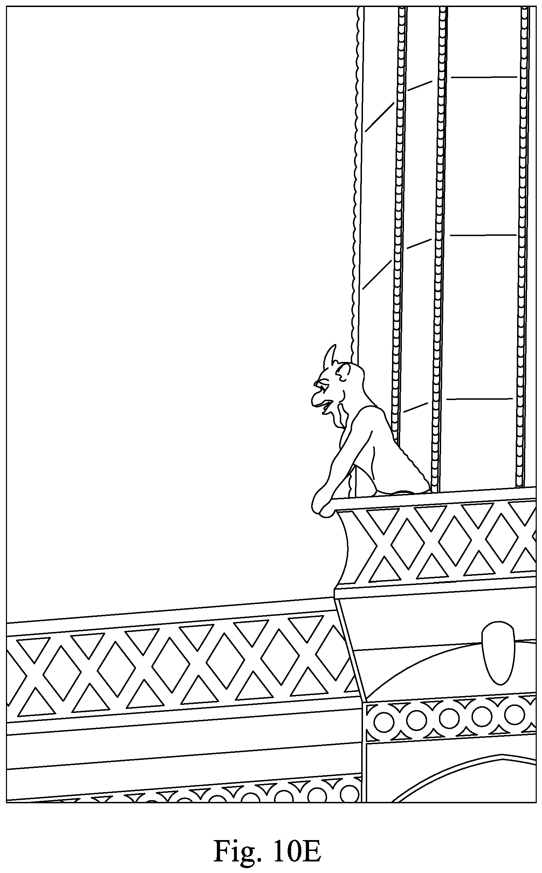

Fig. 10E is a schematic view of another image captured via the electronic device 1000 according to the 10th embodiment in Fig. 10B. In Fig. 10E, the telephoto camera module 1024 has the enlarging function of the high magnification, and the distant image can be captured and enlarged with high magnification via the telephoto camera module 1024.

In Figs. 10C to 10E, the zooming function can be obtained via the electronic device 1000, when the scene is captured via the camera module with different focal lengths cooperated with the function of image processing.

<11th embodiment>

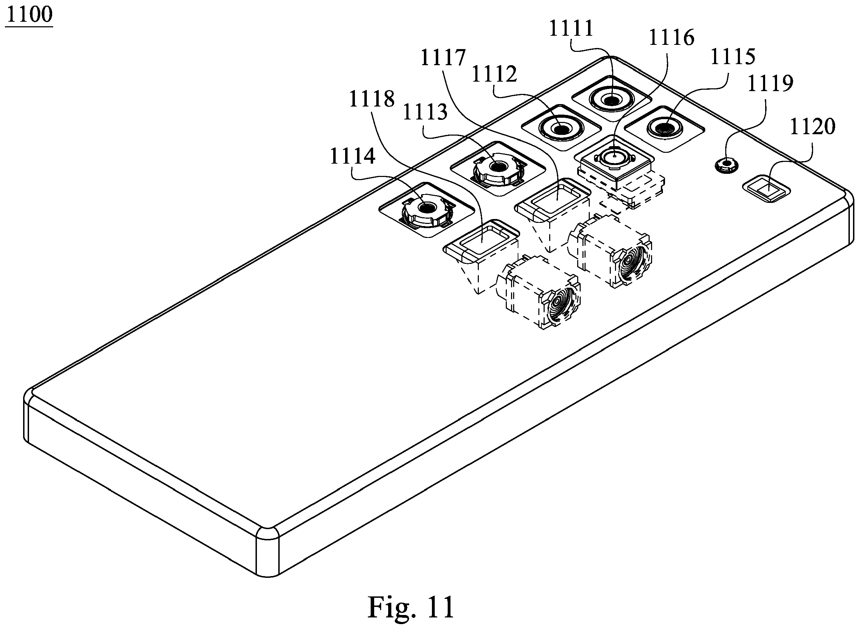

Fig. 11 is a schematic view of an electronic device 1100 according to the 11th embodiment of the present disclosure. In Fig. 11, the electronic device 1100 is a smart phone, which includes camera modules, wherein the camera module includes an imaging lens assembly module and an image sensor, and the image sensor is disposed on an image surface of the imaging lens assembly module. Furthermore, the imaging lens assembly module includes an imaging lens element set and a plate-shaped light blocking element. Moreover, the camera modules can be ultra-wide angle camera modules 1111, 1112, wide angle camera modules 1113, 1114, telephoto camera modules 1115, 1116, 1117, 1118 and a Time-Of-Flight (TOF) module 1119. The TOF module 1119 can be another type of the camera module, and the disposition is not limited thereto. Particularly, the plate-shaped light blocking element can be the plate-shaped light blocking element according to any one of the aforementioned 1st embodiment to the 9th embodiment, but the present disclosure is not limited thereto.

Furthermore, the telephoto camera modules 1117, 1118 are configured to fold the light, but the present disclosure is not limited thereto.

To meet a specification of the camera module of the electronic device 1100, the electronic device 1100 can further include an optical anti-shake mechanism (not shown). Furthermore, the electronic device 1100 can further include at least one focusing assisting module (not shown) and at least one sensing element (not shown). The focusing assisting module can be a flash module 1120 for compensating a color temperature, an infrared distance measurement component, a laser focus module and so on. The sensing element can have functions for sensing physical momentum and kinetic energy, such as an accelerator, a gyroscope, a Hall Effect Element, to sense shaking or jitters applied by hands of the users or external environments. Accordingly, the camera module of the electronic device 1100 equipped with an auto-focusing mechanism and the optical anti-shake mechanism can be enhanced to achieve the superior image quality. Furthermore, the electronic device 1100 according to the present disclosure can have a capturing function with multiple modes, such as taking optimized selfies, High Dynamic Range (HDR) under a low light condition, 4K Resolution recording and so on.

Moreover, all of other component structures and dispositions according to the 11th embodiment are the same as the component structures and the dispositions according to the 10th embodiment, and will not be described again herein.

<12th embodiment>

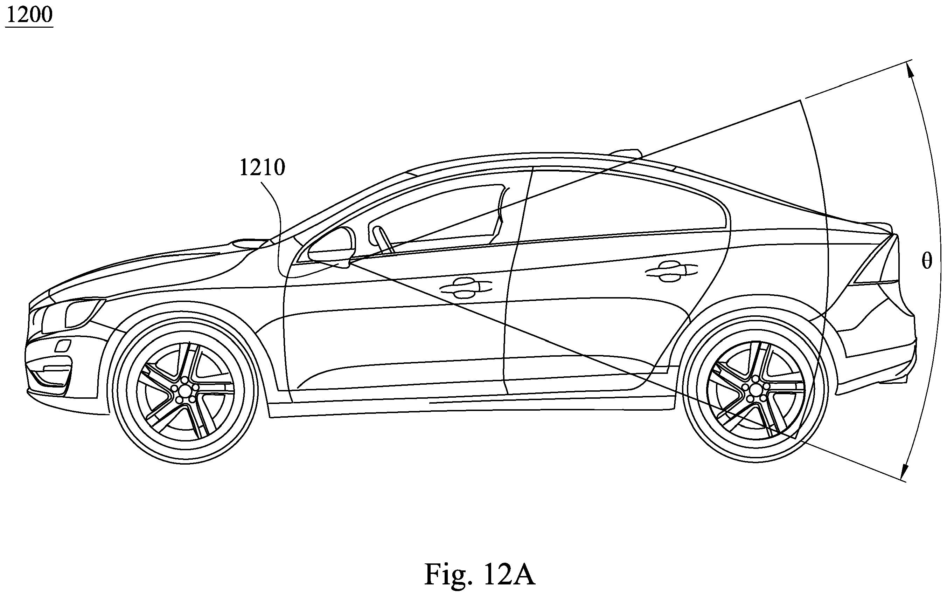

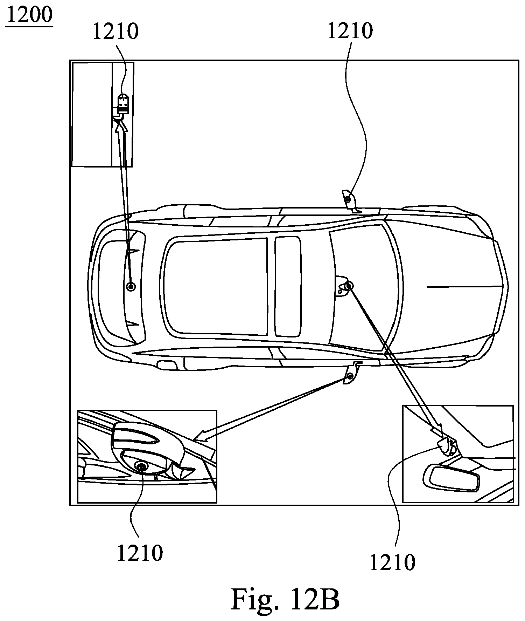

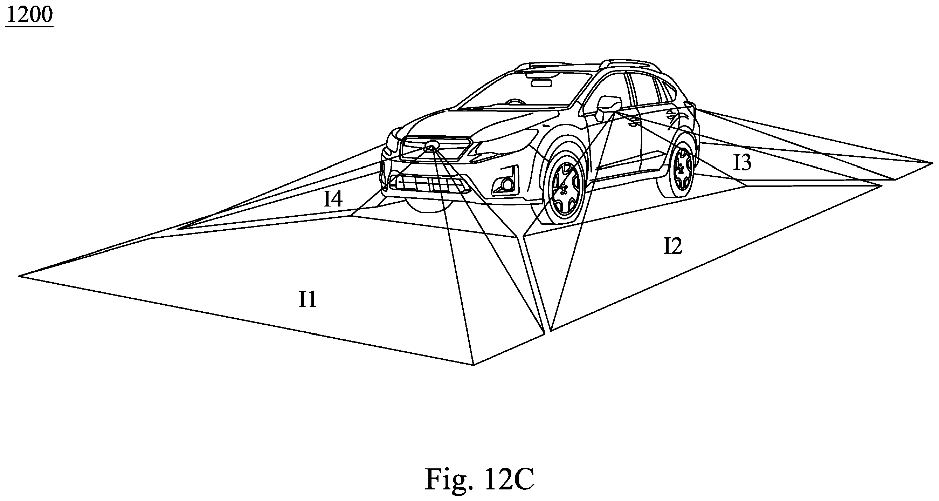

Fig. 12A is a schematic view of a vehicle instrument 1200 according to the 12th embodiment of the present disclosure, Fig. 12B is another schematic view of the vehicle instrument 1200 according to the 12th embodiment in Fig. 12A, and Fig. 12C is another schematic view of the vehicle instrument 1200 according to the 12th embodiment in Fig. 12A. In Fig. 12A to Fig. 12C, an electronic device (not shown) is applied to the vehicle instrument 1200, and the electronic device includes camera modules 1210, wherein each of the camera modules 1210 includes an imaging lens assembly module and an image sensor. The image sensor is disposed on an image surface of the imaging lens assembly module, and the imaging lens assembly module includes an imaging lens element set and a plate-shaped light blocking element. In the 12th embodiment, a number of camera modules 1210 is six, the camera modules 1210 are vehicle camera modules, and the structures of the plate-shaped light blocking element can be the plate-shaped light blocking element according to any one of the aforementioned 1st embodiment to the 9th embodiment, but the present disclosure is not limited thereto.

In Fig. 12A to Fig. 12B, two of the camera modules 1210 are disposed below a left rearview mirror and a right rearview mirror, respectively, to capture the image information with a visual angle θ. Particularly, the visual angle θ can satisfy the following condition 40 degrees < θ < 90 degrees. Therefore, the image information within a left lane and a right lane can be captured.

In Fig. 12B, another two of the camera modules 1210 can be disposed in an inner space of the vehicle instrument 1200. Particularly, the another two of the camera modules 1210 are disposed near a rearview mirror and near a rear window in the vehicle instrument 1200, respectively. Moreover, the camera modules 1210 can be disposed on the non-mirror surfaces of the left rearview mirror and the right rearview mirror, respectively, but the present disclosure is not limited thereto.

In Fig. 12C, the other two of the camera modules 1210 can be disposed at a front-end and a rear-end of the vehicle instrument 1200, respectively, wherein the camera modules 1210 are disposed at a front-end and a rear-end of the vehicle instrument 1200, and below the left rearview mirror and the right rearview mirror. It is favorable to a driver to obtain the information of the outer space, such as external space informations I1, I2, I3, I4, but the present disclosure is not limited thereto. Therefore, more visual angles can be provided to reduce the blind spot, so that the driving safety can be improved.

Moreover, it is helpful to identify the traffic information out of the vehicle instrument 1200 via disposing the camera modules 1210 around the vehicle instrument 1200, which is favorable for realizing a function of autopilot driving.

**Claims**

1. An imaging lens assembly module (100), comprising:

   an imaging lens element set (110) having an optical axis (X) and comprising at least one lens element (111, 112, 113, 114);
   at least one light folding element (120) configured to fold the optical axis (X) at least once, and the at least one light folding element (120) comprising an incident surface (121), an exit surface (122) and at least one optical reflecting surface (123); and
   a plate-shaped light blocking element (130a) keeping an air distance between the plate-shaped light blocking element (130a) and the at least one light folding element (120), and comprising:

      at least two layered structures (131a) disposed corresponding to the at least one light folding element (120); and
      a plurality of columnar air structures (132a), the columnar air structures (132a) farther away from the at least one light folding element (120) than a surface (134a) of the plate-shaped light blocking element (130a) from the at least one light folding element (120), and the surface (134a) of the plate-shaped light blocking element (130a) facing toward the at least one light folding element (120);

   wherein a thickness of the plate-shaped light blocking element (130a) is Dt, a depth of each of the columnar air structures (132a) is d, and the following condition is satisfied:

$$0.1 \leq d/Dt \leq 1.$$

2. The imaging lens assembly module (100) of claim 1, wherein the thickness of the plate-shaped light blocking element (130a) is Dt, the depth of each of the columnar air structures (132a) is d, and the following condition is satisfied:

$$0.30 \leq d/Dt \leq 0.95.$$

3. The imaging lens assembly module (100) of any of claims 1-2, wherein the at least two layered structures (531) comprise at least one cladding layer (541) and at least one base layer (542), a sum of a thickness of one of the at least one cladding layer (541) and a thickness of one of the at least one base layer (542) is Dm, the thickness of the plate-shaped light blocking element (530) is Dt, and the following condition is satisfied:

$$0.5 \leq Dm/Dt \leq 1.$$

4. The imaging lens assembly module (100) of any of claims 1-3, wherein a number of the at least two layered structures (531) of the plate-shaped light blocking element (530) is two.

5. The imaging lens assembly module (100) of any of claims 1-4, wherein a diameter of each of the columnar air structures (532) is Dc, and the following condition is satisfied:

$$0.005 \text{ mm} \leq Dc \leq 0.021 \text{ mm}.$$

6. The imaging lens assembly module (100) of any of claims 1-5, wherein the diameter of each of the columnar air structures (532) is Dc, and the following condition is satisfied:

$$0.007 \text{ mm} \leq Dc \leq 0.017 \text{ mm}.$$

7. The imaging lens assembly module (100) of any of claims 1-6, wherein a distance between adjacent two of the columnar air structures (532) is Ds, and the following condition is satisfied:

$$0.01 \text{ mm} \leq Ds \leq 0.25 \text{ mm}.$$

8. The imaging lens assembly module (100) of any of claims 1-7, wherein the distance between the adjacent two of the columnar air structures (532) is Ds, and the following condition is satisfied:

$$0.01 \text{ mm} \leq Ds \leq 0.10 \text{ mm}.$$

9. The imaging lens assembly module (100) of any of claims 1-8, wherein the depth of each of the columnar air structures (532) is d, and the following condition is satisfied:

$$0.01 \text{ mm} \leq d \leq 0.10 \text{ mm}.$$

10. The imaging lens assembly module (100) of any of claims 1-9, wherein an area of the surface of the plate-shaped light blocking element (530) is A, an area of a region with the columnar air structures (532) on the surface of the plate-shaped light blocking element (530) is Ad, and the following condition is satisfied:

$$0.005 \leq Ad/A \leq 1.$$

11. The imaging lens assembly module (100) of any of claims 1-10, wherein the area of the surface of the plate-shaped light blocking element (530) is A, the area of the region with the columnar air structures (532) on the surface of the plate-shaped light blocking element (530) is Ad, and the following condition is satisfied:

$$0.005 \leq Ad/A \leq 0.750.$$

12. The imaging lens assembly module (100) of any of claims 1-11, wherein the plate-shaped light blocking element (130a) further comprises an aperture structure (133a), the aperture structure (133a) is disposed corresponding to the at least one light folding element (120).

13. The imaging lens assembly module(100) of any of claims 1-12, wherein the aperture structure (833) comprises a light blocking structure (834), the light blocking structure (834) comprises a plurality of protrusions, an average maximum height of the light blocking structure (834) is h, and the following condition is satisfied:

$$0.001 \text{ mm} \le h \le 0.050 \text{ mm}.$$

**14.** The imaging lens assembly module (100) of any of claims 1-13, further comprising:
an assembling portion (150), the assembling portion (150) disposed corresponding to the surface (134a) of the plate-shaped light blocking element (130a), wherein the assembling portion (150) keeps a predetermined air distance between the plate-shaped light blocking element (130a) and the at least one light folding element (120).

**15.** The imaging lens assembly module (100) of any of claims 1-14, further comprising:
an assembling portion (150), the assembling portion (150) disposed corresponding to the other surface of the plate-shaped light blocking element (130a), wherein the assembling portion (150) keeps a predetermined air distance between the plate-shaped light blocking element (130a) and the at least one light folding element (120).

**16.** The imaging lens assembly module (100) of any of claims 1-15, wherein the at least one light folding element (120) is a prism.

**17.** A camera module (10), comprising:

the imaging lens assembly module (100) of any of claims 1-16; and
an image sensor (11) disposed on an image surface (IMG) of the imaging lens assembly module (100).

**18.** An electronic device (1000), comprising:
the camera module (10) of claim 17.

**19.** An imaging lens assembly module (100), comprising:

an imaging lens element set (110) having an optical axis (X) and comprising at least one lens element (111, 112, 113, 114); and
a plate-shaped light blocking element (130b) keeping an air distance between the plate-shaped light blocking element (130b) and the at least one lens element (111, 112, 113, 114), and comprising :

at least two layered structures (131b) disposed corresponding to the at least one lens element (111, 112, 113, 114); and
a plurality of columnar air structures (132b), the columnar air structures (132b) farther away from the at least one lens element (111, 112, 113, 114) than a surface (134b) of the plate-shaped light blocking element (130b) from the at least one lens element (111, 112, 113, 114), and the surface (134b) of the plate-shaped light blocking element (130b) facing toward the at least one lens element (111, 112, 113, 114);

wherein a thickness of the plate-shaped light blocking element (130b) is Dt, a depth of each of the columnar air structures (132b) is d, and the following condition is satisfied:

$$0.1 \le d/Dt \le 1.$$

**20.** The imaging lens assembly module (100) of claim 19, wherein the thickness of the plate-shaped light blocking element (130b) is Dt, the depth of each of the plurality of columnar air structures (132b) is d, and the following condition is satisfied:

$$0.30 \le d/Dt \le 0.95.$$

**21.** The imaging lens assembly module (100) of any of claims 19-20, wherein the at least two layered structures (531) comprise at least one cladding layer (541) and at least one base layer (542), a sum of a thickness of one of the at least one cladding layer (541) and a thickness of one of the at least one base layer (542) is Dm, the thickness of the plate-shaped light blocking element (530) is Dt, and the following condition is satisfied:

$$0.5 \le Dm/Dt \le 1.$$

22. The imaging lens assembly module (100) of any of claims 19-21, wherein a number of the at least two layered structures (531) of the plate-shaped light blocking element (530) is two.

23. The imaging lens assembly module (100) of any of claims 19-22, wherein a diameter of each of the columnar air structures (532) is Dc, and the following condition is satisfied:

$$0.005 \text{ mm} \leq Dc \leq 0.021 \text{ mm}.$$

24. The imaging lens assembly module (100) of any of claims 19-23, wherein a diameter of each of the columnar air structures (532) is Dc, and the following condition is satisfied:

$$0.007 \text{ mm} \leq Dc \leq 0.017 \text{ mm}.$$

25. The imaging lens assembly module (100) of any of claims 19-24, wherein a distance between adjacent two of the columnar air structures (532) is Ds, and the following condition is satisfied:

$$0.01 \text{ mm} \leq Ds \leq 0.25 \text{ mm}.$$

26. The imaging lens assembly module (100) of any of claims 19-25, wherein the distance between the adjacent two of the columnar air structures (532) is Ds, and the following condition is satisfied:

$$0.01 \text{ mm} \leq Ds \leq 0.10 \text{ mm}.$$

27. The imaging lens assembly module (100) of any of claims 19-26, wherein the depth of each of the columnar air structures (532) is d, and the following condition is satisfied:

$$0.01 \text{ mm} \leq d \leq 0.10 \text{ mm}.$$

28. The imaging lens assembly module (100) of any of claims 19-27, wherein an area of the surface of the plate-shaped light blocking element (530) is A, an area of a region with the columnar air structures (532) on the surface of the plate-shaped light blocking element (530) is Ad, and the following condition is satisfied:

$$0.005 \leq Ad/A \leq 1.$$

29. The imaging lens assembly module (100) of any of claims 19-28, wherein the area of the surface of the plate-shaped light blocking element (530) is A, the area of the region with the columnar air structures (532) on the surface of the plate-shaped light blocking element (530) is Ad, and the following condition is satisfied:

$$0.005 \leq Ad/A \leq 0.750.$$

30. The imaging lens assembly module (100) of any of claims 19-29, wherein the plate-shaped light blocking element (130b) further comprises a aperture structure (133b), the aperture structure (133b) disposed corresponding to the at least one lens element (111, 112, 113, 114).

31. The imaging lens assembly module (100) of any of claims 19-30, wherein the aperture structure (833) comprises a light blocking structure (834), the light blocking structure (834) presents a plurality of protrusions, an average maximum height of the light blocking structure (834) is h, and the following condition is satisfied:

$$0.001 \text{ mm} \leq h \leq 0.050 \text{ mm}.$$

Fig. 1A

EP 4 495 640 A1

Fig. 1B

100

Fig. 1C

Fig. 1D

130b

133b

132b

Ds

Ds

Fig. 1E

EP 4 495 640 A1

130b

133b

131b

132b

131b

Dt

Fig. 1F

Fig. 1G

EP 4 495 640 A1

230

233

232

Ds

Ds

EP 4 495 640 A1

Fig. 2A

230

231

233

232

Dt

231

Fig. 2B

Fig. 2C

EP 4 495 640 A1

330

332

333

Ds

Ds

Fig. 3A

330

331

333

332

331

Dt

Fig. 3B

EP 4 495 640 A1

Fig. 3C

Fig. 4A

430

431

433

432

431

Dt

Fig. 4B

EP 4 495 640 A1

Fig. 4C

Fig. 5A

EP 4 495 640 A1

530

532

Dt

531

531

533

EP 4 495 640 A1

Fig. 5B

Fig. 5C

532 541 542

D
Dc
d
Db
Dm

Fig. 6A

630

631

633

632

Dt

631

Fig. 6B

EP 4 495 640 A1

Fig. 6C

EP 4 495 640 A1

730

733

732

Ds

Ds

Fig. 7A

730

731

733

732

731

Dt

EP 4 495 640 A1

Fig. 7B

Fig. 7C

830

833

832

Ds

Ds

834

h

Fig. 8A

EP 4 495 640 A1

Fig. 8B

Fig. 8C

EP 4 495 640 A1

Fig. 9A

Fig. 9B

EP 4 495 640 A1

1021

Fig. 10A

EP 4 495 640 A1

Fig. 10B

Fig. 10C

Fig. 10D

Fig. 10E

Fig. 11

1200

1210

θ

Fig. 12A

Fig. 12B

1200

I3

I4

I2

I1

Fig. 12C

EP 4 495 640 A1

**Europäisches Patentamt**
**European Patent Office**
**Office européen des brevets**

# EUROPEAN SEARCH REPORT

Application Number

EP 24 18 6325

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 218 728 306 U (LARGAN PRECISION CO LTD) 24 March 2023 (2023-03-24) * figures 1B, 2H, 2I, 1D, 5A * | 1-31 | INV. G02B5/00 G02B13/00 G02B27/00 |
| Y | US 2012/234794 A1 (ISURUGI AKINOBU [JP] ET AL) 20 September 2012 (2012-09-20) * paragraphs [0002], [0003]; figures 11b, 11c * | 1-31 | |
| Y | CN 217 484 665 U (LARGAN PRECISION CO LTD) 23 September 2022 (2022-09-23) * figure 2 * | 13,31 | |
| | | | TECHNICAL FIELDS SEARCHED (IPC) |
| | | | G02B H04N H01L |

The present search report has been drawn up for all claims

| Place of search | Date of completion of the search | Examiner |
|---|---|---|
| Munich | 6 December 2024 | Jones, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 495 640 A1**

## ANNEX TO THE EUROPEAN SEARCH REPORT
## ON EUROPEAN PATENT APPLICATION NO.

EP 24 18 6325

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2024

| Patent document cited in search report | | Publication date | Patent family member(s) | | Publication date |
|---|---|---|---|---|---|
| CN 218728306 | U | 24-03-2023 | BR 102023008689 | A2 | 28-11-2023 |
| | | | CN 117092785 | A | 21-11-2023 |
| | | | CN 218728306 | U | 24-03-2023 |
| | | | EP 4276501 | A1 | 15-11-2023 |
| | | | TW 202344914 | A | 16-11-2023 |
| | | | US 2023370707 | A1 | 16-11-2023 |
| US 2012234794 | A1 | 20-09-2012 | CN 102639307 | A | 15-08-2012 |
| | | | TW 201131196 | A | 16-09-2011 |
| | | | US 2012234794 | A1 | 20-09-2012 |
| | | | WO 2011065429 | A1 | 03-06-2011 |
| CN 217484665 | U | 23-09-2022 | BR 102023000440 | A2 | 26-09-2023 |
| | | | CN 116560162 | A | 08-08-2023 |
| | | | CN 217484665 | U | 23-09-2022 |
| | | | DE 202023100023 | U1 | 02-02-2023 |
| | | | EP 4220247 | A1 | 02-08-2023 |
| | | | TW 202331393 | A | 01-08-2023 |
| | | | TW 202403426 | A | 16-01-2024 |
| | | | US 2023247273 | A1 | 03-08-2023 |

EPO FORM P0459

For more details about this annex : see Official Journal of the European Patent Office, No. 12/82